# EUROPEAN PATENT APPLICATION

(11) **EP 4 818 766 A1**
(43) Date of publication of application: **07.10.2026**
(21) Application number: 24915134.1
(22) Date of filing: 23.12.2024
(51) Int. Cl.: G02B 1/10, G02B 1/08, G02B 1/04, G02B 1/11, G02B 27/10, G09F 9/30, G02B 27/01, B60K 35/21, B60R 11/02

(54) **WINDOW UNIT, DISPLAY APPARATUS, AND MEANS OF TRANSPORT**

(30) Priority: 02.01.2024 CN 202410014123
(71) Applicant: Yinwang Intelligent Technologies Co., Ltd., Shenzhen, Guangdong 518110 (CN)
(72) Inventor: OUYANG, Xia, Shenzhen, Guangdong 518110 (CN); ZHAI, Ruizhi, Shenzhen, Guangdong 518110 (CN); HUANG, Jiawei, Shenzhen, Guangdong 518110 (CN)
(74) Representative: MERH-IP Matias Erny Reichl Hoffmann Patentanwälte PartG mbB
(86) International application number: PCT/CN2024/141434
(87) International publication number: WO 2025/145919

(57) **Abstract**

This application provides a window unit that can be used in a display apparatus. The window unit provided in this application can eliminate ambient stray light, to reduce reflectance of stray light on a surface of the display apparatus and eliminate glare in the display apparatus, so that display effect and user experience are improved. The window unit provided in this application includes a spectral film, a substrate, and a first medium. The spectral film is configured to reflect first image light and transmit second image light. The second image light is generated based on the first image light, and the second image light is transmitted from a first surface of the substrate to a second surface that is opposite to the first surface. The first medium is configured to eliminate stray light transmitted from the second surface of the substrate to the first surface.

## Description

This application claims priority to Chinese Patent Application No. 202410014123.4, filed with the China National Intellectual Property Administration on January 2, 2024 and entitled "WINDOW UNIT, DISPLAY APPARATUS, AND TRANSPORTATION MEANS", which is incorporated herein by reference in its entirety.

### TECHNICAL FIELD

This application relates to the field of display technologies and the field of intelligent vehicle driving technologies, and more specifically, to a window unit, a display apparatus, and a transportation means.

### BACKGROUND

Vehicles already become an indispensable transportation means in people's daily life. With intelligent development of vehicles, people's application requirements for vehicles evolve from a simple transportation means to a living space that offers specific information access and entertainment. Display apparatuses based on virtual image display technologies provide users with new intelligent in-vehicle display experience.

In some virtual image display apparatuses, users can view images and videos by using an optical window. As a window for light transmission, the optical window cannot prevent external stray light from entering the display apparatus. However, after stray light entering through the optical window is reflected inside the apparatus, strong glare is generated, causing visual fatigue of users, affecting viewing effect, and deteriorating viewing experience.

In view of this, how to reduce reflection of the external stray light on the display apparatus and the glare caused after the stray light enters the display apparatus to improve display effect of the display apparatus and improve user experience is a problem to be resolved.

### SUMMARY

This application provides a window unit, a display apparatus, and a transportation means. The window unit provided in this application can eliminate ambient stray light, to reduce glare in a display apparatus, and reduce reflection of the stray light on the window unit, so that display effect and user experience are improved.

According to a first aspect, an embodiment of this application provides a window unit. The window unit provided in this application includes a spectral film, a substrate, and a first medium. The spectral film is configured to reflect first image light and transmit second image light, the second image light is generated based on the first image light, the second image light is transmitted from a first surface of the substrate to a second surface of the substrate, and the first surface is opposite to the second surface; and the first medium is configured to eliminate stray light, and the stray light is transmitted from the second surface to the first surface.

Based on the foregoing solution, the window unit provided in this application eliminates the stray light through the first medium, so that after the window unit provided in this application is used in a display apparatus, reflection of the stray light on the window unit can be reduced and eliminated, and glare caused by the stray light can be reduced and eliminated, to improve display effect.

With reference to the first aspect, in some implementations of the first aspect, an external absorptance *A_{EXT}* and an internal absorptance *A_{INT}* of the window unit meet *A_{EXT}* ≥ *A_{INT}*, an external reflectance *R_{EXT}* and an internal reflectance *R_{INT}* of the window unit meet: *R_{EXT}* ≤ *R_{INT}* , the external absorptance *A_{EXT}* is an absorptance of the window unit for the stray light, the internal absorptance *A_{INT}* is an absorptance of the window unit for the second image light, the external reflectance *R_{EXT}* is a reflectance of the window unit for the stray light, and the internal reflectance *R_{INT}* is a reflectance of the window unit for the first image light.

Based on the foregoing solution, the absorptance of the window unit provided in this application for the stray light is greater than that of the image light, so that display effect of the display apparatus can be ensured.

With reference to the first aspect, in some implementations of the first aspect, the first medium is an optical thin film made of at least one layer of metal material, and the optical thin film is disposed on a surface of the spectral film or disposed inside the spectral film.

With reference to the first aspect, in some implementations of the first aspect, a material of the optical thin film is metal chromium Cr or metal titanium Ti.

With reference to the first aspect, in some implementations of the first aspect, a range of the external absorptance *A_{EXT}* meets 40%≤*A_{EXT}*≤95%, and a range of the internal reflectance *R_{INT}* meets 10%≤*R_{INT}*≤60%.

With reference to the first aspect, in some implementations of the first aspect, the window unit further includes a neutral density (ND) filter, the ND filter is disposed on the first surface and/or an outer side of the second surface, and the ND filter is configured to eliminate the stray light.

With reference to the first aspect, in some implementations of the first aspect, a range of the external absorptance *A_{EXT}* meets 45%≤*A_{EXT}*≤99%, and a range of the internal reflectance *R_{INT}* meets 10%*R_{INT}*≤60%*.*

With reference to the first aspect, in some implementations of the first aspect, the window unit further includes a polarization module, the polarization module includes a plurality of polarization elements, and the polarization module is disposed on the outer side of the second surface, and is configured to eliminate the stray light.

With reference to the first aspect, in some implementations of the first aspect, the window unit further includes a polarization module, the polarization module includes a plurality of polarization elements, and the polarization module is disposed on an outer side of the second surface, and is configured to eliminate the stray light.

With reference to the first aspect, in some implementations of the first aspect, a range of the external absorptance *A_{EXT}* meets *6*0%≤*A_{EXT}*≤99%, and a range of the internal reflectance *R_{INT}* meets 10%≤*R_{INT}*≤60%.

With reference to the first aspect, in some implementations of the first aspect, the first medium is a neutral density ND filter, the ND filter is disposed on the first surface and/or an outer side of the second surface, and the ND filter is configured to eliminate the stray light.

With reference to the first aspect, in some implementations of the first aspect, the window unit further includes a polarization module, the polarization module includes a plurality of polarization elements, and the polarization module is disposed on the outer side of the second surface, and is configured to eliminate the stray light.

With reference to the first aspect, in some implementations of the first aspect, the first medium is a polarization module, the polarization module includes a plurality of polarization elements, and the polarization module is disposed on an outer side of the second surface, and is configured to eliminate the stray light.

With reference to the first aspect, in some implementations of the first aspect, the window unit further includes an anti-reflection coating, and the anti-reflection coating is disposed on the outer side of the second surface, and is configured to eliminate the stray light.

With reference to the first aspect, in some implementations of the first aspect, the reflectance of the window unit for the stray light is less than 4%.

According to a second aspect, an embodiment of this application provides a display apparatus. The display apparatus includes: an image generation unit, an image magnification unit, and the window unit provided in the first aspect or any one of the implementations of the first aspect, where the image generation unit is configured to emit the first image light to the window unit; the window unit is further configured for a human eye to view, through the window unit, a virtual image formed by the second image light; and the image magnification unit generates through reflection the second image light based on the first image light from the window unit.

According to a third aspect, an embodiment of this application provides a cabin system, where the cabin system includes the display apparatus provided in the second aspect.

According to a fourth aspect, an embodiment of this application provides a transportation means that includes the display apparatus provided in the second aspect or the cabin system provided in the third aspect.

With reference to the fourth aspect, in some implementations of the fourth aspect, the display apparatus is disposed on at least one of a headrest of a seat of the transportation means, a backrest of the seat of the transportation means, and a dashboard of the transportation means.

For specific beneficial effects brought by the second aspect and the fourth aspect, refer to descriptions of the beneficial effects in the first aspect. Details are not described herein again.

### BRIEF DESCRIPTION OF DRAWINGS

FIG. 1 is a diagram of an application scenario of an intelligent cabin display system 100 to which an embodiment of this application is applicable;
FIG. 2 is a diagram of an application scenario of an intelligent cabin display system 200 to which an embodiment of this application is applicable;
FIG. 3 is a diagram of a structure of a first type of window unit 300 according to an embodiment of this application;
FIG. 4 is a diagram of a part of a structure of a first type of window unit with 39 film layers according to this application;
FIG. 5 is a diagram of comparison between an internal reflectance of a window unit having only a spectral film 302 and an internal reflectance of a window unit having both the spectral film 302 and an optical film 303 according to this application;
FIG. 6 is a diagram of comparison between an external reflectance of a window unit having only a spectral film 302 and an external reflectance of a window unit having both the spectral film 302 and an optical film 303 according to this application;
FIG. 7 is a diagram of comparison between an external absorptance of a window unit having only a spectral film 302 and an external absorptance of a window unit having both the spectral film 302 and an optical film 303 according to this application;
FIG. 8 is a diagram of an internal absorptance and an external absorptance of a window unit having both a spectral film 302 and an optical film 303 according to this application;
FIG. 9(a) and FIG. 9(b) are diagrams of structures of a second type of window unit 900 according to this application;
FIG. 10 is a diagram of a structure of a third type of window unit 1000 according to this application;
FIG. 11(a) and FIG. 11(b) are diagrams of other structures of a third type of window unit 1000 according to this application;
FIG. 12 is a diagram of a structure of a polarization module 1005 applicable to this application;
FIG. 13 is a diagram of a structure of a fourth type of window unit 1300 according to this application;
FIG. 14 is a diagram of a structure of a fifth type of window unit 1400 according to this application;
FIG. 15 is a diagram of a part of a structure of a second type of window unit with 39 film layers according to this application;
FIG. 16(a) and FIG. 16(b) are diagrams of structures of a sixth type of window unit 1600 according to this application;
FIG. 17(a) and FIG. 17(b) are diagrams of structures of a seventh type of window unit 1700 according to this application;
FIG. 18 is a diagram of a structure of an eighth type of window unit 1800 according to this application;
FIG. 19 is a diagram of a structure of a ninth type of window unit 1900 according to this application;
FIG. 20 is a diagram of a structure of a tenth type of window unit 2000 according to this application;
FIG. 21 is a diagram of a structure of a ninth type of window unit 2100 according to this application;
FIG. 22 is a perspective view of a possible structure of a side surface of a display apparatus 30 applicable to an embodiment of this application;
FIG. 23 is a diagram of a circuit of a display apparatus according to an embodiment of this application;
FIG. 24 is a diagram of a possible functional framework of a transportation means according to an embodiment of this application; and
FIG. 25 is a functional block diagram of a mobile carrier 25 according to an embodiment of this application.

### DESCRIPTION OF EMBODIMENTS

The following describes technical solutions of this application with reference to accompanying drawings.

For ease of understanding of embodiments of this application, the following descriptions are provided.

First, the terms such as "first", "second", and various numeric numbers in the following text descriptions or accompanying drawings in embodiments of this application are merely used for differentiation for ease of description, but are not used to limit the scope of embodiments of this application. For example, first image light and second image light are used to distinguish between different pieces of image light.

Second, the terms "include", "have" and any other variants in embodiments of this application shown below are intended to cover the non-exclusive inclusion. For example, a system, product, or device that includes a series of units is not necessarily limited to those units expressly listed, but may include other units not expressly listed or inherent to such a product or device.

Third, in embodiments of this application, the term such as "example" or "for example" represents an example, an illustration, or a description. Any embodiment or design solution described as "example" or "for example" should not be explained as being more preferred or having more advantages than another embodiment or design solution. The word such as "example" or "for example" is used to present a related concept in a specific manner for ease of understanding.

Fourth, in embodiments of this application, image light is light carrying an image (or image information), and is used to generate an image, and may also be referred to as imaging light or the like.

Fifth, in the accompanying drawings of this application, for ease of description, thickness, size, and shape of each optical element are slightly exaggerated. In particular, the shapes of the optical elements shown in the accompanying drawings are shown by embodiments, and the accompanying drawings are merely examples and not drawn strictly to scale.

Sixth, in the descriptions of embodiments of this application, orientations or position relationships indicated by the terms "up", "down", "outer side", and the like are defined relative to orientations or positions in which components are schematically placed in the accompanying drawings. It should be understood that these directional terms are relative concepts, and are used for relative description and clarification, but do not indicate or imply that a specified apparatus or structural component needs to have a specific orientation or be constructed and operated in a specific orientation. These directional terms may vary accordingly based on a change of the orientation in which a component is placed in the accompanying drawings, and therefore cannot be understood as a limitation on this application.

Seventh, unless otherwise limited, all terms (including technical and scientific terms) used in this application have same meanings as understood usually by a person of ordinary skill in the art to which this application belongs.

Eighth, this application relates to a neutral density (neutral density, ND) filter, which may also be referred to as an ND film, a neutral density filter, a neutral filter, an attenuation filter, a fixed density filter, or the like. The ND filter absorbs or reflects light that is not transmitted, to uniformly reduce transmittance for a specific part of a spectrum. A reflective ND filter adopts a principle of thin film interference to transmit a part of light and reflect the other part of the light. An absorptive ND filter is usually a material that absorbs light itself or after some elements are doped in the material. In this application, the absorptive ND filter is used, and is doped with metal ions, including but not limited to iron ions, cobalt ions, or the like; or doped with an organic dye, including but not limited to melanin, aniline black, or the like; or doped with an inorganic substance, including but not limited to carbon powder, carbon nanotube, or the like; or doped with various combinations of the foregoing materials, to absorb light.

Ninth, this application relates to a window unit, which may also be referred to as window pieces (Windows), optical window, window, window module, or the like. The window unit is a transparent window used in an optical system that allows light to pass through to enter or leave the system. A main function of the window unit is to separate environments on two sides, for example, separating the internal and external of an instrument. The separation protects the internal instrument by allowing light to pass through while preventing contamination, maintaining vacuum, and resisting oxidation. It does not alter an optical magnification, but only affects an optical path length within an optical path.

Tenth, this application relates to an anti-reflection coating (anti-reflection coating, AR), which is also referred to as an anti-reflective coating or a reflection-reducing coating. The anti-reflection coating is usually formed by coating a plurality of layers of thin films on a substrate. The plurality of layers of thin films are usually formed by alternating materials with a high refractive index and materials with a low refractive index. A film layer with a high refractive index causes a phase delay of a light wave, and a film layer with a low refractive index causes a phase advance of a light wave. A principle of the anti-reflection coating is to reduce a refractive index difference between an external environment and the substrate (the substrate on which the anti-reflection coating is coated), so that stray light is transmitted through the substrate as much as possible, to reduce stray light reflected by a surface of the substrate. In addition, a design of film layers with a high refractive index and film layers with a low refractive index may enable stray light reflected from the substrate to interfere with stray light reflected by a surface of the anti-reflection coating, so that extinction is implemented.

With rapid development of intelligent vehicles, vehicles play an increasing quantity of roles in people's life, and requirements, for example, providing entertainment services such as games and movie watching for people who spend a long time riding the vehicle or providing a private office display environment for office personnel, for in-vehicle display gradually increase. In some in-vehicle projection display apparatuses, a user can view a large and distant virtual image through an optical window. However, in such a display apparatus, ambient stray light enters the display apparatus through the optical window, and consequently, a risk of light leakage and glare of the optical window is increased.

In view of this, this application provides a window unit that has strong performance of eliminating external stray light and can reduce reflection of the stray light on the window unit and eliminate glare. When the window unit provided in this application is used in a display apparatus, image quality can be improved, so that the display apparatus has excellent display performance.

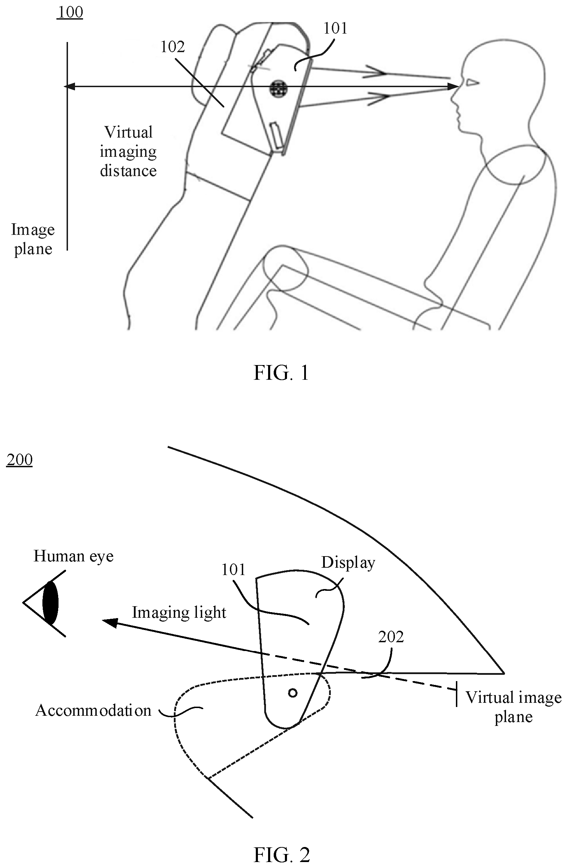

FIG. 1 is a diagram of an application scenario of an intelligent cabin display system 100 to which an embodiment of this application is applicable. As shown in FIG. 1, the intelligent cabin display system 100 includes at least one display apparatus 101 and at least one seat 102. FIG. 1 shows an example in which there are one display apparatus and one seat, where the display apparatus 101 is disposed on a backrest of the seat 102. The display apparatus 101 can generate a magnified virtual image on an image plane at a long distance through an input of an external video signal (which may also be referred to as a signal source), to provide a viewer with large-format and long-distance visual experience, so that requirements of a user in a plurality of application scenarios such as recreation and business office are met.

It should be noted that the display apparatus 101 may alternatively be installed on a headrest of the seat 102. Alternatively, when the intelligent cabin display system further includes a dashboard, the display apparatus 101 may be installed on the dashboard, as shown in a cabin system 200 in FIG. 2. When the display apparatus 101 is installed on the dashboard 202, the display apparatus 101 may be further designed to be in a form that can be accommodated in the dashboard 202. In this case, a housing of the display apparatus 101 may be designed and shaped with reference to a shape and a color of the dashboard, to implement perfect appearance consistency with an appearance of the dashboard 202 and also take into account an appearance of the cabin system 200. In the system 200, a detector may be further used to detect information such as a posture and a position of the user, and implement automatic display of the display apparatus 101 based on the information such as the posture and the position of the user, to further improve intelligent effect of the cabin system. For example, when it is detected that the user is located in front of the dashboard 202 or that a human eye of the user looks at the display apparatus 101, the display apparatus 101 can automatically rise or slide out from the dashboard 202, and automatically adjust to a proper position and angle to display an image.

It should be further noted that, in this embodiment of this application, the display apparatus 101 may be installed on the backrest or the headrest of the seat 102, or on the dashboard 202 before delivery. Alternatively, the seat 102, the headrest, or the dashboard 202 may be modified after delivery, so that the display apparatus is installed on the backrest or the headrest of the seat 102, or on the dashboard 202. This is not limited in this application.

It may be understood that the intelligent cabin display system 100 and the intelligent cabin display system 200 shown in FIG. 1 and FIG. 2 are merely examples. In other words, an intelligent cabin display system applicable to embodiments of this application is not limited to that shown in FIG. 1 or FIG. 2, and may be another system that includes the intelligent cabin display system 100 or the intelligent cabin display system 200 shown in FIG. 1 or FIG. 2 or another system similar to that shown in FIG. 1 or FIG. 2. This is not limited in this application.

It should be further noted that FIG. 1 and FIG. 2 are merely application scenarios to which embodiments of this application are applicable. To be specific, the window unit provided in this application may be used in a display apparatus in another display system. In other words, using the display apparatus provided in embodiments of this application includes but is not limited to using the display apparatus in an in-vehicle display system.

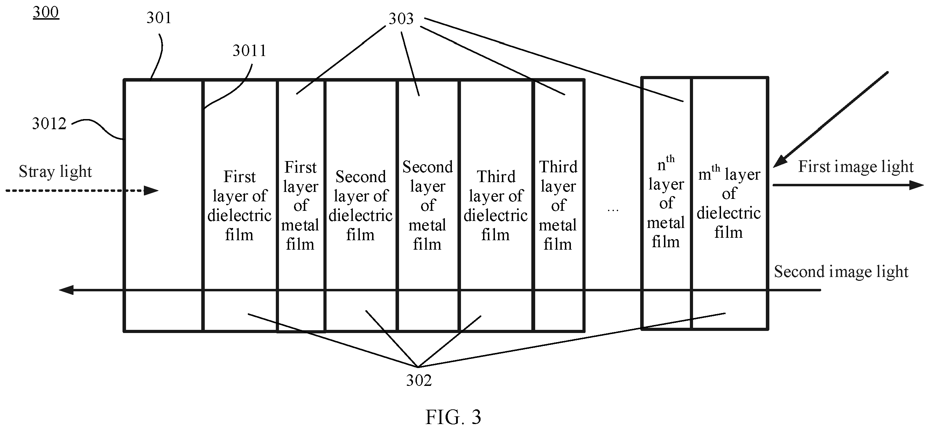

FIG. 3 is a diagram of a structure of a first type of window unit 300 according to an embodiment of this application. It may be understood that the window unit 300 may be used in the display apparatus 101 shown in FIG. 1 or FIG. 2. Specifically, as shown in FIG. 3, the window unit 300 includes a substrate 301, a spectral film 302, and an optical thin film 303. The substrate 301 includes a first surface 3011 and a second surface 3012 that are distributed opposite to each other. The spectral film 302 is disposed on an outer side of the first surface 3011 of the substrate 301, and is configured to reflect first image light and transmit second image light to the substrate 301. The second image light is generated based on the first image light, and is transmitted from the first surface 3011 of the substrate 301 to the second surface 3012. The optical thin film 303 is configured to eliminate stray light, and the stray light is transmitted from the second surface 3012 of the substrate 301 to the first surface 3011.

In the solution of this application, the spectral film 302 includes at least one layer of dielectric film. Specifically, as shown in FIG. 3, the spectral film 302 includes a first layer of dielectric film, a second layer of dielectric film, a third layer of dielectric film, ..., and an m^{th} layer of dielectric film, where m is an integer greater than or equal to 1, for example, 1, 2, 3 .... It should be noted that a material of the at least one layer of dielectric film may be silicon oxide like SiO₂, magnesium fluoride like MgF₂, niobium oxide like Nb₂O₅, titanium oxide like TiO₂, indium tin oxide ITO, zinc sulfide ZnS, chromium oxide, nickel oxide, aluminum oxide, or the like. This is not limited in this application. In addition, when the spectral film 302 includes a plurality of layers of dielectric films, whether materials of the plurality of layers of dielectric films are completely the same is not limited in this application. In other words, in the solution of this application, the materials of the plurality of layers of dielectric films may be completely the same, or completely different, or partially the same. For example, when the spectral film 302 includes five layers of dielectric films, that is, m is equal to 5, the spectral film 302 includes a first layer of dielectric film, a second layer of dielectric film, a third layer of dielectric film, a fourth layer of dielectric film, and a fifth layer of dielectric film. In this case, the first layer of dielectric film, the second layer of dielectric film, the third layer of dielectric film, the fourth layer of dielectric film, and the fifth layer of dielectric film may be completely the same. Alternatively, materials of the first layer of dielectric film, the second layer of dielectric film, the third layer of dielectric film, the fourth layer of dielectric film, and the fifth layer of dielectric film are completely different. Alternatively, materials of a part of the first layer of dielectric film, the second layer of dielectric film, the third layer of dielectric film, the fourth layer of dielectric film, and the fifth layer of dielectric film are the same. For example, a material of the first layer of dielectric film is the same as a material of the third layer of dielectric film, but is different from a material of the second layer of dielectric film, a material of the fourth layer of dielectric film, and a material of the fifth layer of dielectric film. Details are not described herein again.

In the solution of this application, the optical thin film 303 includes at least one layer of metal film. Specifically, as shown in FIG. 3, the optical thin film 303 includes a first layer of metal film, a second layer of metal film, a third layer of metal film, ..., and an n^{th} layer of metal film, where n is an integer greater than or equal to 1, for example, 1, 2, 3 .... It should be noted that a material of the at least one layer of metal film may be nickel, chromium, titanium, tantalum, silver, gold, copper, zinc, aluminum, alloy, or the like. This is not limited in this application. In addition, when the optical thin film 303 includes a plurality of layers of metal films, whether materials of the plurality of layers of metal films are completely the same is not limited in this application. In other words, in the solution of this application, the materials of the plurality of layers of metal films may be completely the same, completely different, or partially the same. For example, when the optical thin film 303 includes three layers of metal films, that is, n is equal to 3, the optical thin film 303 includes a first layer of metal film, a second layer of metal film, and a third layer of metal film. In this case, the first layer of metal film, the second layer of metal film, and the third layer of metal film may be completely the same. Alternatively, materials of the first layer of metal film, the second layer of metal film, and the third layer of metal film are completely different. Alternatively, materials of two of the first layer of metal film, the second layer of metal film, and the third layer of metal film are the same. For example, a material of the first layer of metal film is the same as a material of the third layer of metal film, but is different from a material of the second layer of metal film. Details are not described herein.

Specifically, in the solution of this application, after the stray light is transmitted from the substrate 301 to the optical thin film 303, the at least one layer of metal film in the optical thin film 303 can absorb the stray light, to reduce reflection of the stray light on the window unit and eliminate glare.

It should be noted that, in FIG. 3, both the optical thin film 303 and the spectral film 302 are disposed on the outer side of the first surface 3011 of the substrate 301, and the at least one layer of metal film of the optical thin film 303 is disposed between a plurality of layers of dielectric films of the spectral film 302. However, positions of the optical thin film 303 and the spectral film 302 are not limited in this application. In some other embodiments, one of the at least one layer of metal film of the optical thin film 303 is disposed on the first surface 3011 of the substrate 301 (or disposed on a surface that is of a first dielectric film of the spectral film 302 and that is close to the first surface 3011 of the substrate 301). Alternatively, in some other embodiments, one of the at least one layer of metal film of the optical thin film 303 is disposed on a surface that is of a last dielectric film of the spectral film 302 and that is away from the first surface 3011 of the substrate 301. Alternatively, in some other embodiments, one of the at least one layer of metal film of the optical thin film 303 is disposed on the second surface 3012 of the substrate 301.

For example, when the optical thin film 303 includes one layer of metal film, the layer of metal film may be disposed on the first surface 3011 of the substrate 301, or disposed on the surface that is of the first dielectric film of the spectral film 302 and that is close to the first surface 3011 of the substrate 301, or the layer of metal film is disposed between the substrate 301 and the spectral film 302. In this case, the layer of metal film can absorb the stray light transmitted from the substrate 301 and stray light reflected from the spectral film 302, receive the second image light transmitted from the spectral film 302, and transmit the second image light to the substrate 301. Alternatively, the layer of metal film is disposed on the outer surface that is of the last dielectric film of the spectral film 302 and that is away from the first surface 3011 of the substrate 301. In this case, the layer of metal film can absorb stray light transmitted from the spectral film 302 and stray light reflected by an element inside the display apparatus on which the window unit 300 is installed, and transmit the second image light to the spectral film 302. Alternatively, the layer of metal film may be disposed on the second surface 3012 of the substrate 301. In this case, the layer of metal film can directly absorb stray light from an external environment, weaken stray light entering the substrate 301, and absorb stray light reflected and transmitted by the substrate 301.

For example, when the optical thin film 303 includes a plurality of layers of metal films, two of the plurality of layers of metal films may be respectively disposed on the first surface 3011 of the substrate 301 (that is, disposed on the surface that is of the first dielectric film of the spectral film 302 and that is close to the first surface 3011 of the substrate 301, that is, disposed between the substrate 301 and the spectral film 302) and the second surface 3012 of the substrate 301. In this case, the metal film disposed on the first surface 3011 of the substrate 301 can absorb the stray light transmitted from the substrate 301 and the stray light reflected by the spectral film 302, and transmit, to the substrate 301, the second image light transmitted from the spectral film 302. The metal film disposed on the second surface 3012 of the substrate 301 can directly absorb the stray light from the external environment, reduce the stray light entering the substrate 301, and absorb the stray light reflected and transmitted by the second surface 3012 of the substrate 301. Alternatively, two of the plurality of layers of metal films may be respectively disposed on the outer surface that is of the last dielectric film of the spectral film 302 and that is away from the first surface 3011 of the substrate 301 and either of the first surface 3011 of the substrate 301 and the second surface 3012 of the substrate 301. In this case, the metal film disposed on the outer surface that is of the last dielectric film of the spectral film 302 and that is away from the first surface 3011 of the substrate 301 can absorb the stray light transmitted from the spectral film 302 and the stray light reflected by the element inside the display apparatus on which the window unit 300 is installed, and transmit the second image light to the spectral film 302. The metal film disposed on the first surface 3011 of the substrate 301 (that is, disposed on the surface that is of the first dielectric film of the spectral film 302 and that is close to the first surface 3011 of the substrate 301, that is, disposed between the substrate 301 and the spectral film 302) can absorb the stray light transmitted from the substrate 301 and the stray light reflected by the spectral film 302, and transmit the second image light to the substrate 301. The metal film disposed on the second surface 3012 of the substrate 301 as a surface of the window unit 300 can directly absorb the stray light from the external environment, weaken the stray light entering the substrate 301, and absorb the stray light reflected and transmitted by the substrate 301.

It should be further noted that, when the optical thin film 303 includes a plurality of layers of metal films, the plurality of layers of metal films may be evenly or unevenly inserted between the plurality of layers of dielectric films. For example, in the embodiment shown in FIG. 3, an example in which the plurality of layers of metal films are evenly disposed between the plurality of layers of dielectric films is shown. It may be understood that, when the plurality of layers of metal films may be disposed between the plurality of layers of dielectric films unevenly, quantities of dielectric films included between two adjacent layers of metal films are not completely the same. In addition, in this embodiment of this application, a quantity of metal films included in the optical thin film 303 may be the same as a quantity of dielectric films included in the spectral film 302, or the quantity of metal films included in the optical thin film 303 may be different from the quantity of dielectric films included in the spectral film 302. This is not limited in this application.

Optionally, a material of the substrate 301 is inorganic glass, for example, silicon dioxide SiO₂ or borosilicate glass BK7. Alternatively, the material of the substrate 301 is a thermoplastic, for example, a polypropylene (polypropylene, PP) material, a polymethyl methacrylate (polymethyl methacrylate, PMMA) material, or a polycarbonate (polycarbonate, PC) material. Alternatively, the material of the substrate 301 is another material, for example, a triacetyl cellulose (triacetyi cellulose, TAC) material. This is not limited in this application.

It may be understood that, in this embodiment of this application, both the spectral film 302 and the optical thin film 303 may be manufactured through a process such as physical vapor deposition (physical vapor deposition, PVD), chemical vapor deposition (chemical vapor deposition, CVD), for example, atomic layer deposition (Atomic Layer Deposition, ALD), sputtering (sputtering), or wet coating. This is not limited in this application. For the processes such as PVD, CVD, ALD, sputtering, and wet coating, refer to process descriptions in the conventional technologies. Details are not described herein again. It may be further understood that, the foregoing listed processes for generating the spectral film 302 and the optical thin film 303 are common film manufacturing processes currently. Other film manufacturing processes that emerge due to future technology development fall within the protection scope of this application, provided that the other film manufacturing processes are applicable to manufacturing the spectral film 302 and the optical thin film 303 in the solution of this application.

It should be noted that the window unit provided in this embodiment of this application absorbs external stray light (through at least one of the foregoing optical thin film 303 and the following ND filter, polarization module, and anti-reflection coating), and can reflect the first image light and transmit the second image light (through the spectral film). Therefore, to avoid deterioration of imaging quality caused by an excessive loss of image light when the window unit absorbs the stray light, in a design of this application, there is a performance requirement for an external absorptance *A_{EXT,}* an internal absorptance *A_{INT},* an external reflectance *R_{EXT}*, and an internal reflectance *R_{INT}* of the window unit. Specifically, the external absorptance *A_{EXT}* and the internal absorptance *A_{INT}* of the window unit meet *A_{EXT}* ≥ *A_{INT},* and the external reflectance *R_{EXT}* and the internal reflectance *R_{INT}* of the window unit meet *R_{EXT}* ≤ *R_{NT}.* The external absorptance *A_{EXT}* is an absorptance of the window unit for the stray light, the internal absorptance *A_{INT}* is an absorptance of the window unit for the second image light, the external reflectance *R_{EXT}* is a reflectance of the window unit for the stray light, and the internal reflectance *R_{INT}* is a reflectance of the window unit for the first image light.

According to the energy conservation law, the external absorptance *A_{EXT}* is determined by the external reflectance *R_{EXT}* and an external transmittance *T_{EXT}.* In other words, *A_{EXT}* meets *A_{EXT}=*1-*R_{EXT}-T_{EXT},* where the external transmittance *T_{EXT}* is a transmittance of the window unit for the stray light. Similarly, the internal absorptance *A_{INT}* is determined by the internal reflectance *R_{INT}* and an internal transmittance *T_{INT}.* In other words, *A_{INT}* meets *A_{INT}=*1-*R_{INT}-T_{INT}*, where the internal transmittance *T_{INT}* is a transmittance of the window unit for the second image light.

Therefore, for the window unit 300 shown in FIG. 3, an external absorptance *A_{EXT}* and an internal absorptance *A_{INT}* of the window unit 300 also meet *A_{EXT}* ≥ *A_{INT},* and an external reflectance *R_{EXT}* and an internal reflectance *R_{INT}* of the window unit also meet *R_{EXT}* ≤ *R_{INT}.* In addition, for the window unit 300 shown in FIG. 3, a range of the external absorptance *A_{EXT}* meets 40%≤*A_{EXT}*≤95%, and a range of the internal reflectance *R_{INT}* meets 10%≤*R_{INT}*≤60%.

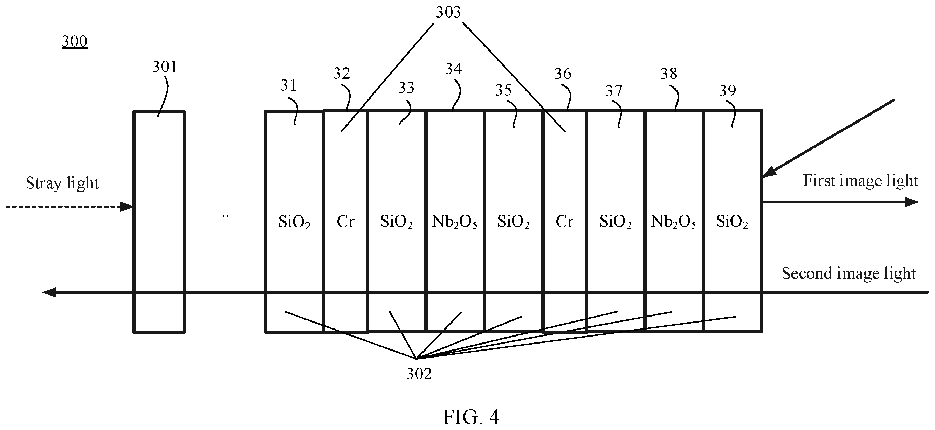

For example, FIG. 4 is a diagram of a part of a structure of a first type of window unit with 39 film layers according to this application. It may be understood that FIG. 4 is a specific structure of the window unit 300 shown in FIG. 3. As shown in FIG. 4, in film layers from a 31^{st} layer to a 39^{th} layer, a metal film Cr layer (including a 32^{nd} layer and a 36^{th} layer) is disposed between two adjacent SiO₂ layers, where the 31^{st} layer, a 33^{rd} layer, a 35^{th} layer, a 37^{th} layer, and the 39^{th} layer are SiO₂ and belong to the spectral film 302, and a 34^{th} layer and a 38^{th} layer are niobium pentoxide Nb₂O₅ and belong to the spectral film 302. When a thickness of each of the 31^{st} layer to the 39^{th} layer is set according to the following Table 1, an external absorptance *A_{EXT}* of the window unit shown in FIG. 4 is approximately 80%. When the thickness of each of the 31^{st} layer to the 39^{th} layer is set according to the following Table 2, the external absorptance *A_{EXT}* of the window unit shown in FIG. 4 is approximately 57%.

**Table 1**

| Film layer number | 31 | 32 | 33 | 34 | 35 | 36 | 37 | 38 | 39 |
|---|---|---|---|---|---|---|---|---|---|
| Material | SiO₂ | Cr | SiO₂ | Nb₂O₅ | SiO₂ | Cr | SiO₂ | Nb₂O₅ | SiO₂ |
| 1/4 optical thickness | 0.1128 | / | 0.7367 | 1.0000 | 0.1330 | / | 0.0200 | 2.2641 | 0.8733 |
| Physical thickness (nm) | 10.66 | 5.00 | 69.62 | 58.26 | 12.57 | 10.00 | 1.89 | 131.91 | 82.53 |

**Table 2**

| Film layer number | 31 | 32 | 33 | 34 | 35 | 36 | 37 | 38 | 39 |
|---|---|---|---|---|---|---|---|---|---|
| Material | SiO₂ | Cr | SiO₂ | Nb₂O₅ | SiO₂ | Cr | SiO₂ | Nb₂O₅ | SiO₂ |
| 1/4 optical thickness | 0.1128 | n/a | 0.7367 | 0.9993 | 0.1330 | n/a | 0.0200 | 2.2641 | 0.8733 |
| Physical thickness (nm) | 10.66 | 0.76 | 69.62 | 58.26 | 12.57 | 0.61 | 1.89 | 131.91 | 82.53 |

It should be noted that, in the foregoing Table 1 and Table 2, the 1/4 optical thickness value and the physical thickness value of each film layer are merely examples, and do not constitute a limitation on the protection scope of this application. To be specific, changing the value in Table 1 or Table 2 falls within the protection scope of this application. For example, the value of the thickness is set to a value with higher precision or a value with lower precision.

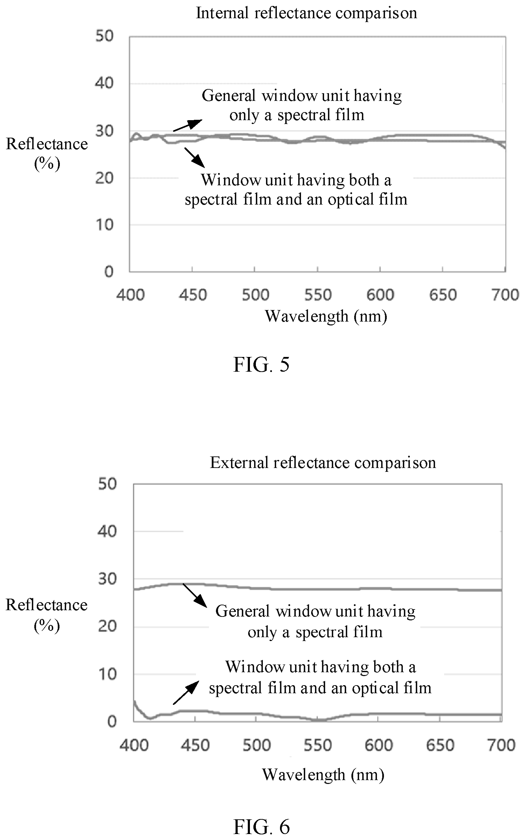

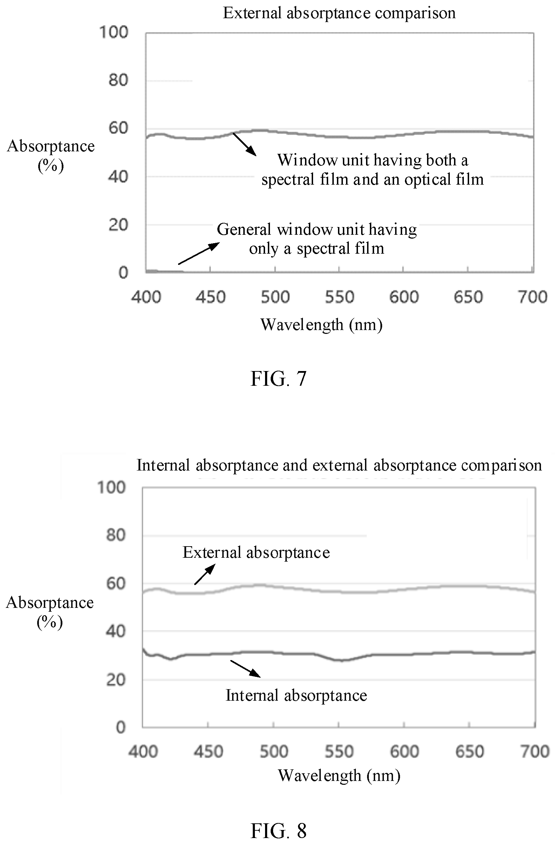

To describe effect of the window unit provided in this application on eliminating the stray light, FIG. 5 to FIG. 7 separately show a comparison effect diagram of a general window unit having only a spectral film and the window unit having both the spectral film and the optical film provided in this application. FIG. 5 is a diagram of internal reflectance comparison. It can be learned from FIG. 5 that, an internal reflectance of the general window unit having only the spectral film and an internal reflectance of the window unit having both the spectral film and the optical film are both approximately 30%. FIG. 6 is a diagram of external reflectance comparison. It can be learned from FIG. 6 that, an external reflectance of the window unit having both the spectral film and the optical film is less than 4.5% when a wavelength is within a range of 400 nm to 700 nm, and an external reflectance of the general window unit having only the spectral film is approximately 28%. The large reflectance causes serious reflection on the general window unit having only the spectral film. FIG. 7 is a diagram of external absorptance comparison. It can be learned from FIG. 7 that an absorptance of the window unit having both the spectral film and the optical film for external stray light is close to 60%, and the general window unit having only the spectral film almost does not generate extra absorption of the stray light.

It may be understood that, to avoid significantly affecting light effect of the display apparatus, the window unit should reduce absorption of internal image light as much as possible during absorption of the external stray light. It can be learned from FIG. 8 that an absorptance of the window unit having both the spectral film and the optical film designed in this application for external light is close to 60%, and an absorptance for internal light is only approximately 30%.

In conclusion, it can be learned from FIG. 5 to FIG. 8 that, when the window unit 300 provided in this application is used in the display apparatus, an optical path may be folded through the spectral film, to reduce a size of the display apparatus, and stray light incident to the display apparatus can be absorbed through the optical thin film, to reduce reflection of the stray light, suppress glare, and improve display effect.

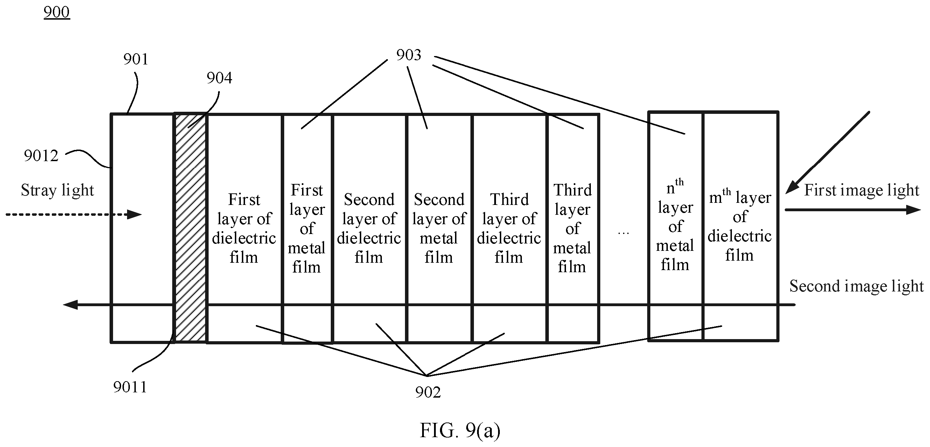

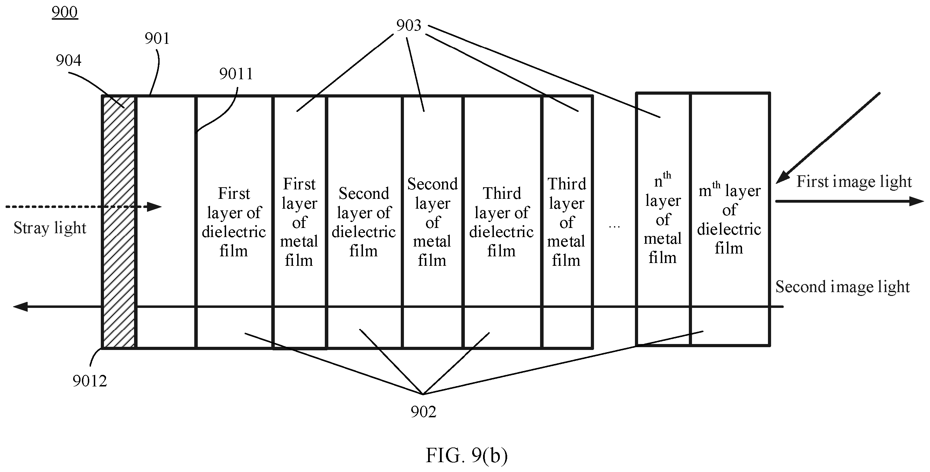

It should be noted that, in the solution of this application, a quantity of substrates included in the window unit is not limited. In other words, the window unit 300 shown in FIG. 3 may alternatively include a plurality of substrates, for example, include two substrates: a first substrate and a second substrate. When the window unit includes the two substrates, a part of the dielectric film and/or the optical thin film may be disposed on the first substrate, and the other part of the dielectric film and/or the optical thin film may be disposed on the second substrate. FIG. 9(a) and FIG. 9(b) are diagrams of structures of a second type of window unit 900 according to this application. As shown in FIG. 9(a) and FIG. 9(b), the window unit 900 includes a substrate 901, a spectral film 902, an optical thin film 903, and an absorptive ND filter 904. The window unit 900 is different from the window unit 300 shown in FIG. 3 in that the absorptive ND filter 904 is added. The absorptive ND filter 904 eliminates stray light by absorbing the stray light, to further eliminate glare generated by the stray light. The absorptive ND filter 904 may be disposed on a first surface 9011 of the substrate 901, as shown in FIG. 9(a), or disposed on a second surface 9012 of the substrate 901, as shown in FIG. 9(b). For functions and positions of the substrate 901, the spectral film 902, and the optical thin film 903, refer to related descriptions of the substrate 301, the spectral film 302, and the optical thin film 303 of the window unit 300 in FIG. 3 respectively. Details are not described herein again.

Optionally, in this application, a material of the absorptive ND filter 904 is a material doped with metal ions (for example, iron ions or cobalt ions); or a material doped with an organic dye (for example, melanin or aniline black); or a material doped with an inorganic substance (for example, carbon powder or carbon nanotube); or another material, for example, a material generated by various combinations of the foregoing materials. This is not limited in this application. In addition, an absorptance of the used absorptive ND filter 904 is not limited in this application, for example, may be 30%, 40%, 50%, 60%, 70%, 80%, or any absorptance between 30% to 80%.

Optionally, the absorptive ND filter 904 is bonded to the first surface 9011 of the substrate 901 or the second surface 9012 of the substrate 901 through optically clear adhesive (optically clear adhesive).

It should be noted that positions of the spectral film 902, the optical thin film 903, and the absorptive ND filter 904 are not limited in this application. For example, when the absorptive ND filter 904 is disposed between the spectral film 902 or the optical thin film 903 and the surface (the first surface 9011 or the second surface 9012) of the substrate 901, the spectral film 902 or the optical thin film 903 may be disposed on the absorptive ND filter 904 by using a process such as PVD, CVD, ALD, sputtering, or wet coating. In this case, the absorptive ND filter 904 is configured to absorb stray light transmitted from the spectral film 902 or the optical thin film 903, that is, absorb stray light that is not absorbed by a metal film, or is configured to absorb stray light transmitted from the substrate 901. For example, when one layer of metal film in the spectral film 902 or the optical thin film 903 is disposed on an outer side of the second surface 9012 of the substrate 901, the absorptive ND filter 904 may be disposed on an outer side of the spectral film 902 or the metal film. In other words, the spectral film 902 or the optical thin film 903 is disposed between the ND filter 904 and the second surface 9012 of the substrate 901. In this case, the metal film or the spectral film may be disposed on the second surface 9012 by using a process such as PVD, CVD, ALD, sputtering, or wet coating. The absorptive ND filter 904 is bonded to the metal film or the spectral film 902 through the optically clear adhesive. In this case, the absorptive ND filter 904 is configured to directly absorb stray light from an external environment.

It may be further understood that FIG. 9(a) and FIG. 9(b) are merely embodiments in which the window unit 900 includes one absorptive ND filter 904. In some other embodiments, the window unit provided in this application may alternatively include two absorptive ND filters. For example, the two absorptive ND filters may be respectively disposed on the two surfaces of the substrate 901, so that effect of absorbing the external stray light can be further improved.

For the window unit 900 shown in FIG. 9(a) and FIG. 9(b), an external absorptance *A_{EXT}* and an internal absorptance *A_{INT}* of the window unit 900 also meet *A_{EXT}* ≥ *A_{INT}*, and an external reflectance *R_{EXT}* and an internal reflectance *R_{INT}* of the window unit also meet *R_{EXT}* ≤ *R_{INT}*. In addition, a range of the external absorptance *A_{EXT}* meets 45%≤*A_{EXT}*≤99%, and a range of the internal reflectance *R_{INT}* meets 10%≤*R_{INT}*≤60%.

It may be understood that, when the window unit 900 includes the absorptive ND filter, the external absorptance of the window unit 900 is determined by absorption performance of the absorptive ND filter. In other words, absorptive ND filters with different absorptances are selected to implement the external absorptance and the internal reflectance of the window unit 900. For example, when an absorptance of the absorptive ND filter is 50%, the external absorptance of the window unit *A_{EXT}* is approximately 50%; or when the absorptance of the absorptive ND filter is 90%, the external absorptance *A_{EXT}* of the window unit is approximately 90%.

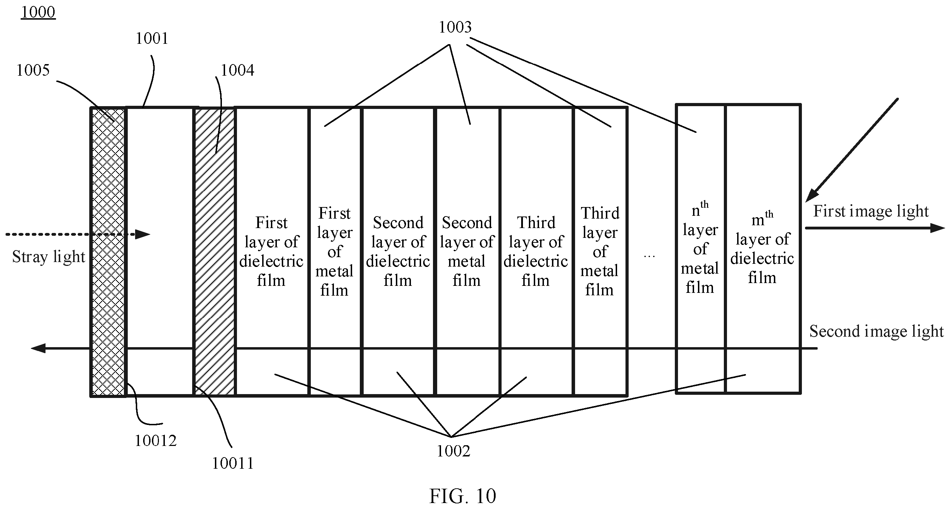

It should be noted that FIG. 9(a) and FIG. 9(b) are merely examples of the window unit with one substrate. In some embodiments, when the window unit includes the absorptive ND filter, the window unit may include a plurality of substrates. FIG. 10 is a diagram of a structure of a third type of window unit 1000 according to this application. As shown in FIG. 10, the window unit 1000 includes a substrate 1001, a spectral film 1002, an optical thin film 1003, an absorptive ND filter 1004, and a polarization module 1005. The window unit 1000 is different from the window unit 900 shown in FIG. 9(a) and FIG. 9(b) in that the polarization module 1005 is added. The polarization module 1005 is disposed on a second surface 10012 of the substrate 1001, and is configured to eliminate stray light. For the substrate 1001, the spectral film 1002, the optical thin film 1003, and the absorptive ND filter 1004, refer to descriptions of corresponding parts in FIG. 3 or FIG. 9(a) and FIG. 9(b) respectively. Details are not described herein again.

Optionally, the polarization module 1005 is bonded to the second surface 10012 of the substrate 1001 through the optically clear adhesive.

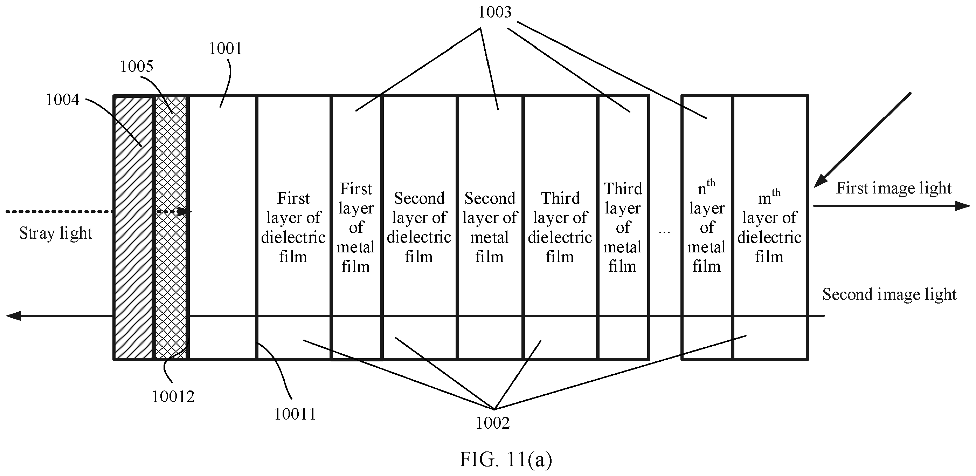

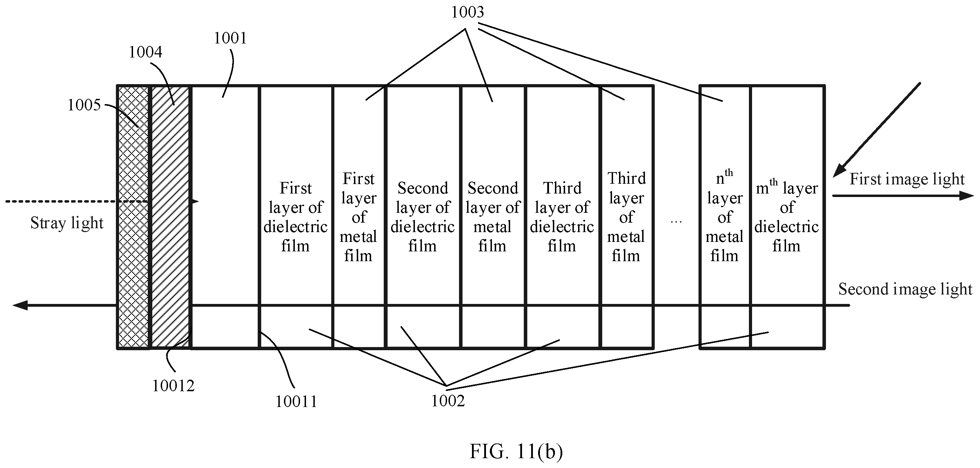

It should be noted that positions of the spectral film 1002, the optical thin film 1003, the absorptive ND filter 1004, and the polarization module are not limited in this application. In some embodiments, when the spectral film 1002 and/or the optical thin film 1003 are/is disposed on an outer side of the second surface 10012 of the substrate 1001, the polarization module 1005 is bonded to the second surface 10012 of the substrate 1001 through the spectral film 1002 and/or the optical thin film 1003. For example, when one layer of metal film in the optical thin film 1003 is disposed on the second surface 10012 of the substrate 1001, the polarization module 1005 is disposed on a surface that is of the metal film and that is not in contact with the substrate 1001. In some other embodiments, when the absorptive ND filter 1004 is disposed on the outer side of the second surface 10012 of the substrate 1001, the polarization module 1005 is bonded to the absorptive ND filter 1004 through the optically clear adhesive. In this case, the absorptive ND filter 1004 may be disposed on an outer side of the polarization module 1005, as shown in FIG. 11(a), or the polarization module 1005 may be disposed on an outer side of the absorptive ND filter 1004, as shown in FIG. 11(b).

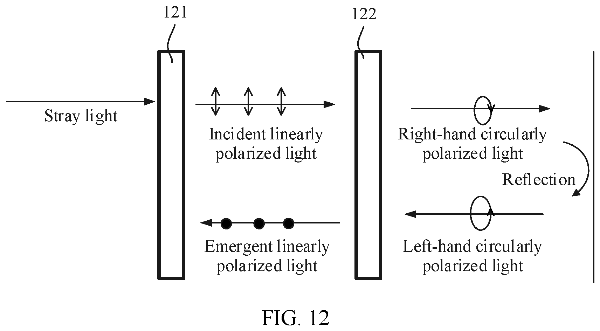

It should be noted that the polarization module 1005 eliminates the stray light by changing a polarization state of the stray light. For example, FIG. 12 is a diagram of a structure of a polarization module 1005 applicable to this application. As shown in FIG. 12, the polarization module 1005 includes a polarizer 121 and a quarter-wave plate 122. Specifically, after external stray light passes through the linear polarizer 121, a light loss is half of linearly polarized light, and the linearly polarized light continues to be incident to the quarter-wave plate 122 and then is converted into right-hand circularly polarized light (or may be left-hand circularly polarized light, and a direction is determined by an included angle between an optical axis of the quarter-wave plate 122 and an optical axis of the linear polarizer 121). Then, the right-hand circularly polarized light is reflected by another element (for example, the substrate 1001, the optical thin film 1003, or the absorptive ND filter 1004) to form left-hand circularly polarized light (when the incident light is left-hand circularly polarized light, right-hand circularly polarized light is generated). After the left-hand circularly polarized light passes through the quarter-wave plate 122 again, emergent linearly polarized light that is perpendicular to a polarization direction of the incident polarized light is generated. The emergent linearly polarized light cannot be emitted through the linear polarizer 121, so that the incident stray light is eliminated.

It should be noted that, in the solution of this application, a structure of the polarization module 1105 is not limited to the structure shown in FIG. 12. For example, the polarization module 1005 may alternatively include a plurality of linear polarizers 121 with parallel optical axis directions, so that the stray light can be further eliminated. Alternatively, the polarization module 1005 may include any combination of a half-wave plate, the linear polarizer, and the quarter-wave plate, or the like.

It should be further noted that, in some embodiments, the absorptive ND filter 1004 may alternatively be replaced by a polarizer. If the polarization module 1005 is a combination of the linear polarizer and the quarter-wave plate, the polarizer (used to replace the absorptive ND filter), the polarizer, the quarter-wave plate, the substrate, the spectral film, and the optical thin film are sequentially disposed along an incident direction of the stray light.

It may be understood that, for the window unit 1000 shown in FIG. 10, an external absorptance *A_{EXT}* and an internal absorptance *A_{INT}* of the window unit 1000 also meet *A_{EXT}* ≥ *A_{INT}*, and an external reflectance *R_{EXT}* and an internal reflectance *R_{INT}* of the window unit also meet *R_{EXT}* ≤ *R_{INT}*.

Similarly, the window unit including the polarization module may alternatively include a plurality of substrates. This is not limited in this application.

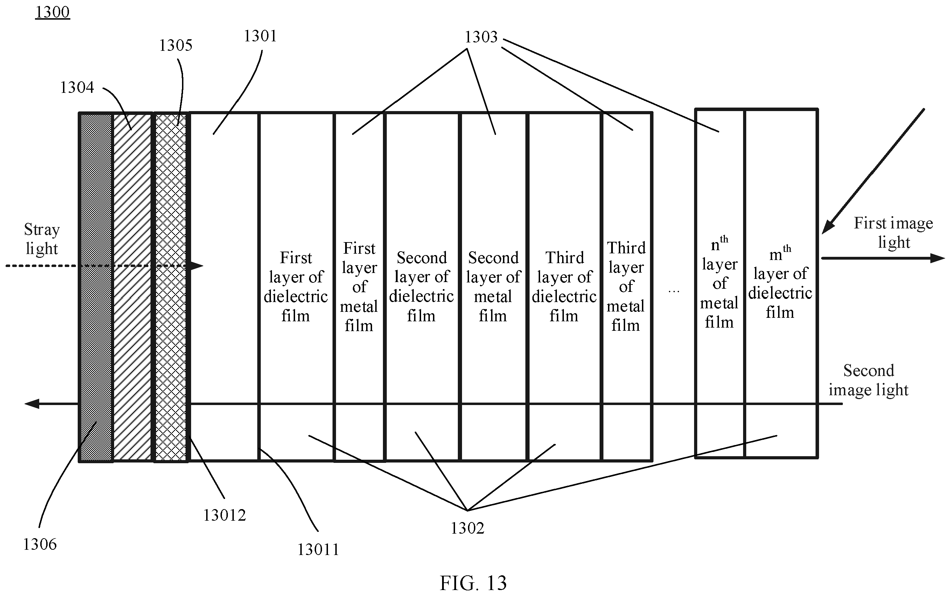

FIG. 13 is a diagram of a structure of a fourth type of window unit 1300 according to this application. As shown in FIG. 13, the window unit 1300 includes a substrate 1301, a spectral film 1302, an optical thin film 1303, an absorptive ND filter 1304, a polarization module 1305, and an anti-reflection coating 1306. The window unit 1300 is different from the window unit 1000 shown in FIG. 10 in that the anti-reflection coating 1306 is added. The anti-reflection coating 1306 is disposed on an outer side of a second surface 13012 of the substrate 1301, that is, disposed on a surface of the absorptive ND filter 1304, and is configured to eliminate stray light. For the substrate 1301, the spectral film 1302, the optical thin film 1303, the absorptive ND filter 1304, and the polarization module 1305, refer to descriptions of corresponding parts in FIG. 3, FIG. 9(a) and FIG. 9(b), or FIG. 10. Details are not described herein again.

It should be noted that the anti-reflection coating 1306 may be disposed on a surface of the absorptive ND filter 1304 by using a process such as PVD, CVD, ALD, sputtering, or wet coating.

Specifically, because the anti-reflection coating 1306 reduces a refractive index difference between external air and the absorptive ND filter 1304, when external stray light is incident on a surface of the anti-reflection coating 1306, a large part of the stray light is transmitted through the absorptive ND filter 1304, and only a small part of the stray light is reflected on the surface of the absorptive ND filter 1304 and reaches the surface of the anti-reflection coating 1306 again. The part of stray light returned to the anti-reflection coating 1306 interferes with stray light reflected on the surface of the anti-reflection coating 1306, so that the incident stray light is eliminated, and the stray light is eliminated.

It may be understood that, for the window unit 1300 shown in FIG. 13, an external absorptance *A_{EXT}* and an internal absorptance *A_{INT}* of the window unit 1300 also meet *A_{EXT}* ≥ *A_{INT}*, and an external reflectance *R_{EXT}* and an internal reflectance *R_{INT}* of the window unit also meet *R_{EXT}* ≤ *R_{INT}*.

Similarly, when the window unit further includes the anti-reflection coating, the window unit may alternatively include a plurality of substrates. This is not limited in this application.

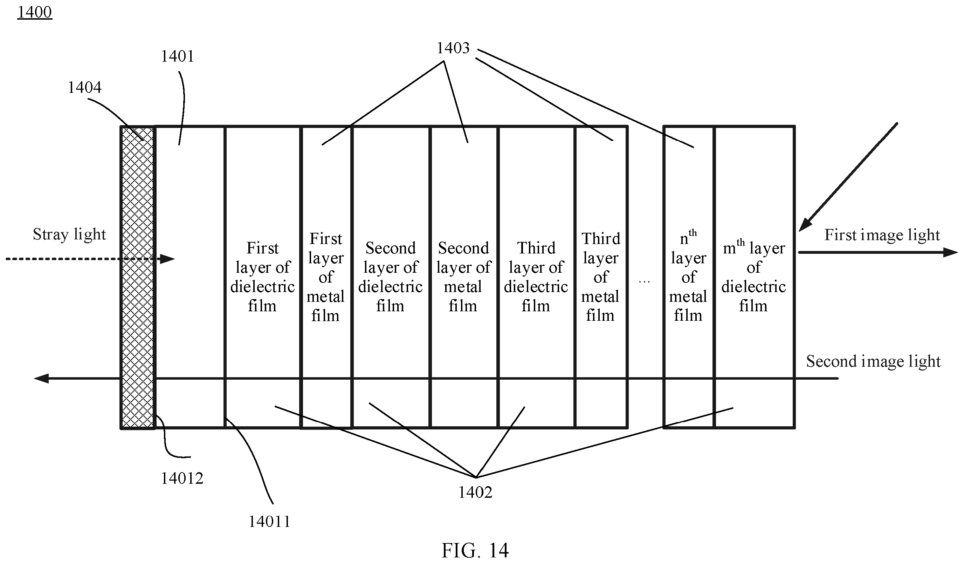

FIG. 14 is a diagram of a structure of a fifth type of window unit 1400 according to this application. As shown in FIG. 14, the window unit 1400 includes a substrate 1401, a spectral film 1402, an optical thin film 1403, and a polarization module 1404. For the substrate 1401, the spectral film 1402, and the optical thin film 1403, refer to descriptions of corresponding parts in FIG. 3, FIG. 9(a) and FIG. 9(b), or FIG. 10. For the polarization module 1404, refer to descriptions of the corresponding part in FIG. 10. Details are not described herein again.

It may be understood that the polarization module 1404 is bonded to a second surface 14012 of the substrate 1401 through the optically clear adhesive.

It may be further understood that, in some embodiments, when the spectral film 1402 and/or the optical thin film 1403 are/is disposed on an outer side of the second surface 14012 of the substrate 1401, the polarization module 1404 is bonded to the second surface 14012 of the substrate 1401 through the spectral film 1402 and/or the optical thin film 1403.

It may be understood that, for the window unit 1400 shown in FIG. 14, an external absorptance *A_{EXT}* and an internal absorptance *A_{INT}* of the window unit 1400 also meet *A_{EXT}* ≥ *A_{INT}*, and an external reflectance *R_{EXT}* and an internal reflectance *R_{INT}* of the window unit also meet *R_{EXT}* ≤ *R_{INT}*. In addition, a range of the external absorptance *A_{EXT}* meets 60%≤*A_{EXT}*≤99%, and a range of the internal reflectance *R_{INT}* meets 10%≤*R_{INT}*≤60%.

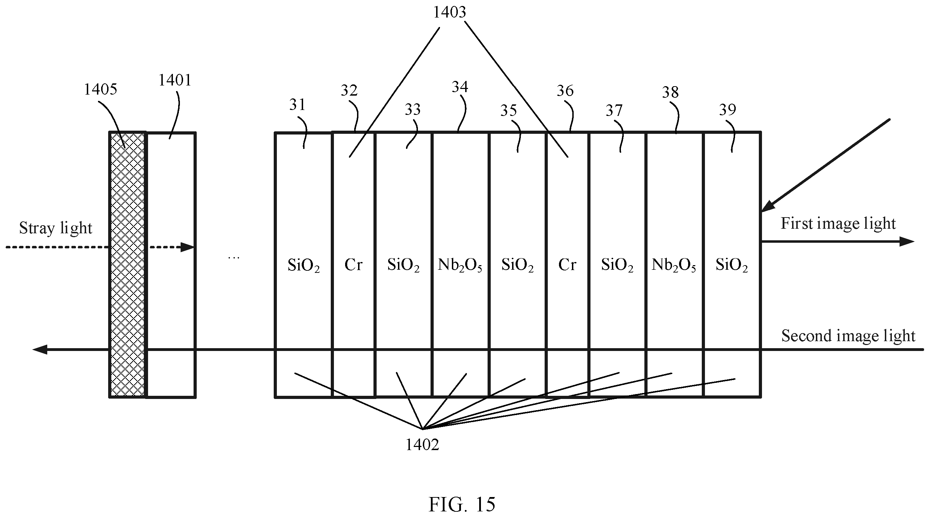

For example, FIG. 15 is a diagram of a part of a structure of a second type of window unit with 39 film layers according to this application. It may be understood that FIG. 15 is a specific structure of the window unit 1400 shown in FIG. 14. As shown in FIG. 15, in film layers from a 31^{st} layer to a 39^{th} layer, a metal film Cr layer (including a 32^{nd} layer and a 36^{th} layer) is disposed between two adjacent SiO₂ layers, where the 31^{st} layer, a 33^{rd} layer, a 35^{th} layer, a 37^{th} layer, and the 39^{th} layer are SiO₂ and belong to the spectral film 1402, and a 34^{th} layer and a 38^{th} layer are niobium pentoxide Nb₂O₅ and belong to the spectral film 1402. When a thickness of each of the 31^{st} layer to the 39^{th} layer is set according to the foregoing Table 2, and a polarizer in the polarization module 1404 is an iodine-based polarizer or a dye-based polarizer, an external absorptance *A_{EXT}* of the window unit shown in FIG. 15 is approximately 80%. When the thickness of each of the 31^{st} layer to the 39^{th} layer is set according to the foregoing Table 1, and the polarizer in the polarization module 1404 is the iodine-based polarizer or the dye-based polarizer, the external absorptance *A_{EXT}* of the window unit shown in FIG. 15 is approximately 90%.

Similarly, for the window unit 1400, a quantity of substrates included in the window unit is not limited in this application.

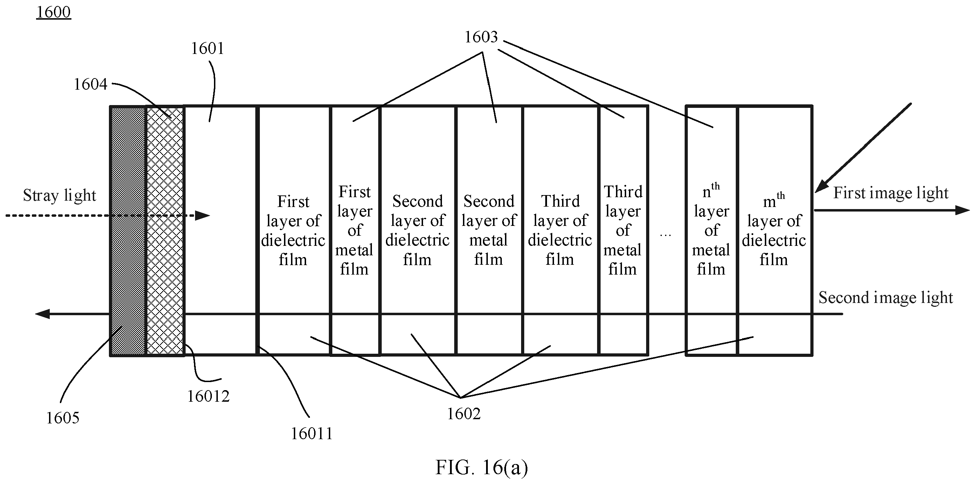

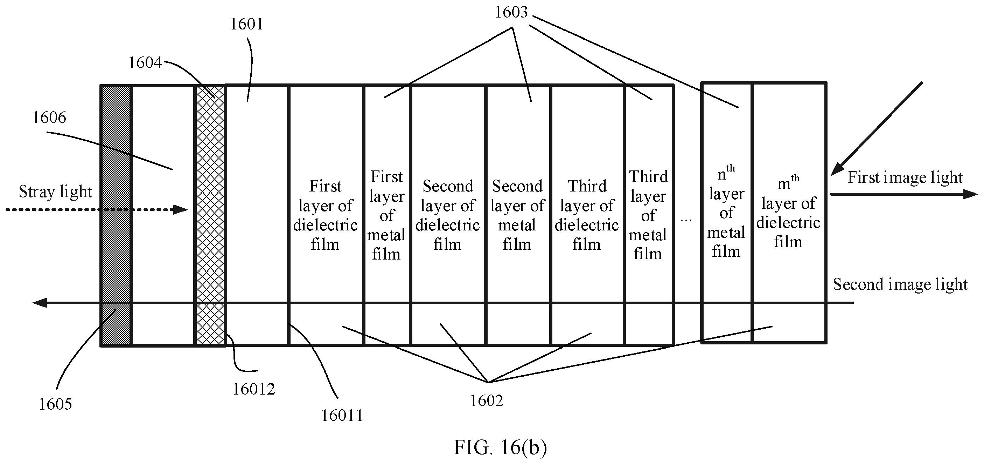

FIG. 16(a) and FIG. 16(b) are diagrams of structures of a sixth type of window unit 1600 according to this application. As shown in FIG. 16(a), the window unit 1600 includes a substrate 1601, a spectral film 1602, an optical thin film 1603, a polarization module 1604, and an anti-reflection coating 1605. The window unit 1600 is different from the window unit 1400 shown in FIG. 14 in that the anti-reflection coating 1605 is added. The anti-reflection coating 1605 is disposed on a surface of the polarization module 1604, and is configured to eliminate stray light. For the substrate 1601, the spectral film 1602, the optical thin film 1603, and the polarization module 1604, refer to descriptions of corresponding parts in FIG. 14. For the anti-reflection coating 1605, refer to descriptions of the corresponding part in FIG. 13. Details are not described herein again.

It may be understood that the anti-reflection coating 1605 may be disposed on the surface of the polarization module 1604 by using a process such as PVD, CVD, ALD, sputtering, or wet coating.

It may be understood that a quantity of substrates included in the window unit is not limited in this application. For example, as shown in FIG. 16(b), the window unit 1600 may alternatively include a substrate 1601, a spectral film 1602, an optical thin film 1603, a polarization module 1604, a substrate 1606, and an anti-reflection coating 1605. The window unit 1600 shown in FIG. 16(b) is different from that shown in FIG. 16(a) in that two substrates are included. For the substrate 1601, the spectral film 1602, the optical thin film 1603, the polarization module 1604, and the anti-reflection coating 1605, refer to corresponding descriptions of FIG. 16(a). For the substrate 1606, refer to descriptions of the substrate 1601. Details are not described herein again.

It may be understood that, for the window unit 1600 shown in FIG. 16(a) and FIG. 16(b), an external absorptance *A_{EXT}* and an internal absorptance *A_{INT}* of the window unit 1600 also meet *A_{EXT}* ≥ *A_{INT}*, and an external reflectance *R_{EXT}* and an internal reflectance *R_{INT}* of the window unit also meet *R_{EXT}* ≤ *R_{INT}*.

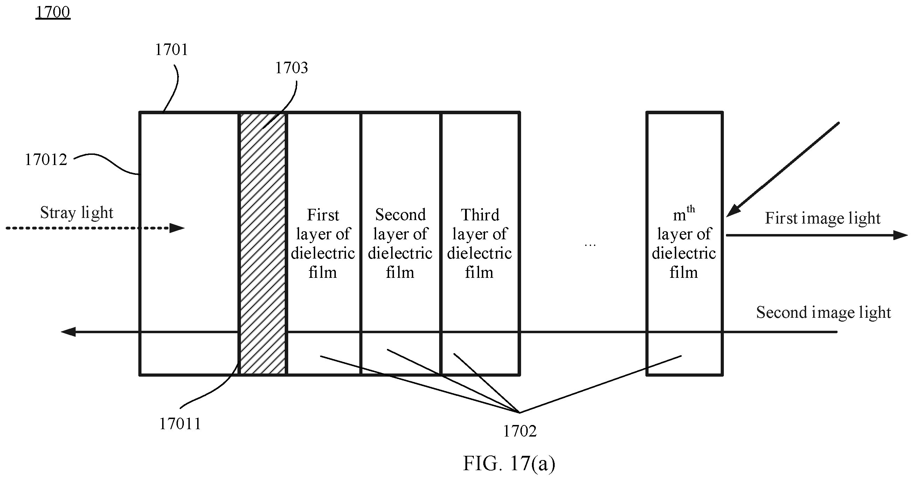

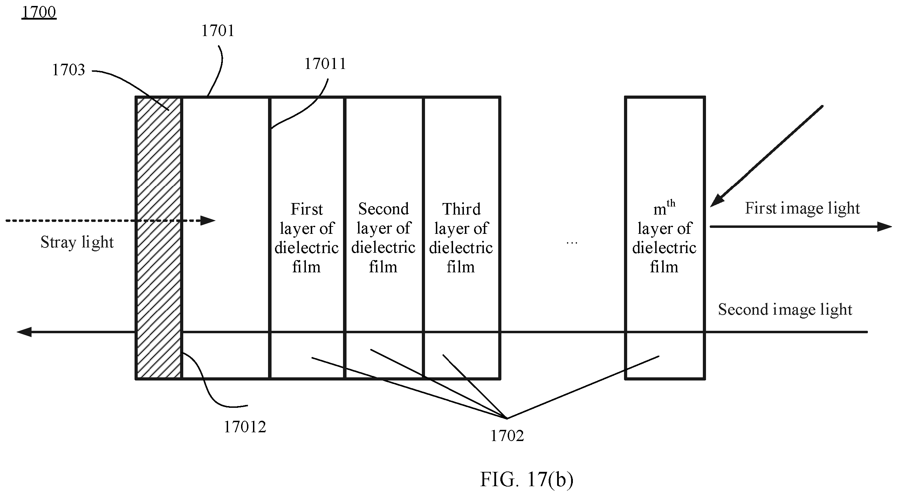

FIG. 17(a) and FIG. 17(b) are diagrams of structures of a seventh type of window unit 1700 according to this application. As shown in FIG. 17(a) and FIG. 17(b), the window unit 1700 includes a substrate 1701, a spectral film 1702, and an absorptive ND filter 1703. It may be understood that the absorptive ND filter 1703 may be disposed on a first surface 17011 of the substrate 1701, as shown in FIG. 17(a), or disposed on a second surface 17012 of the substrate 1701, as shown in FIG. 17(b), and is configured to eliminate stray light by absorbing the stray light. The spectral film 1702 includes at least one layer of dielectric film. Specifically, as shown in FIG. 17(a) and FIG. 17(b), the spectral film 1702 includes a first layer of dielectric film, a second layer of dielectric film, a third layer of dielectric film, ..., and an m^{th} layer of dielectric film, where m is an integer greater than or equal to 1. For other descriptions of the substrate 1701, the spectral film 1702, and the absorptive ND filter 1703, refer to corresponding elements in the foregoing embodiments respectively, for example, related descriptions of the substrate 901, the spectral film 902, and the absorptive ND filter 904 of the window unit 900 in FIG. 9(a) and FIG. 9(b). Details are not described herein again.

It may be understood that, when the absorptive ND filter 1703 is disposed between the spectral film 1702 and the surface (the first surface 17011 or the second surface 17012) of the substrate 1701, the spectral film 1702 may be disposed on the absorptive ND filter 1703 by using a process such as PVD, CVD, ALD, sputtering, or wet coating. In this case, the absorptive ND filter 1703 is configured to absorb stray light transmitted from the spectral film 1702, or is configured to absorb stray light transmitted from the substrate 1701.

It may be further understood that FIG. 17(a) and FIG. 17(b) are merely embodiments in which the window unit 1700 includes one absorptive ND filter 1703. In some other embodiments, the window unit provided in this application may alternatively include two absorptive ND filters. The two absorptive ND filters may be respectively disposed on the two surfaces of the substrate, so that effect of absorbing the external stray light can be further improved.

For the window unit 1700 shown in FIG. 17(a) and FIG. 17(b), an external absorptance *A_{EXT}* and an internal absorptance *A_{INT}* of the window unit 1700 also meet *A_{EXT}* ≥ *A_{INT}*, and an external reflectance *R_{EXT}* and an internal reflectance *R_{INT}* of the window unit also meet *R_{EXT}* ≤ *R_{INT}*.

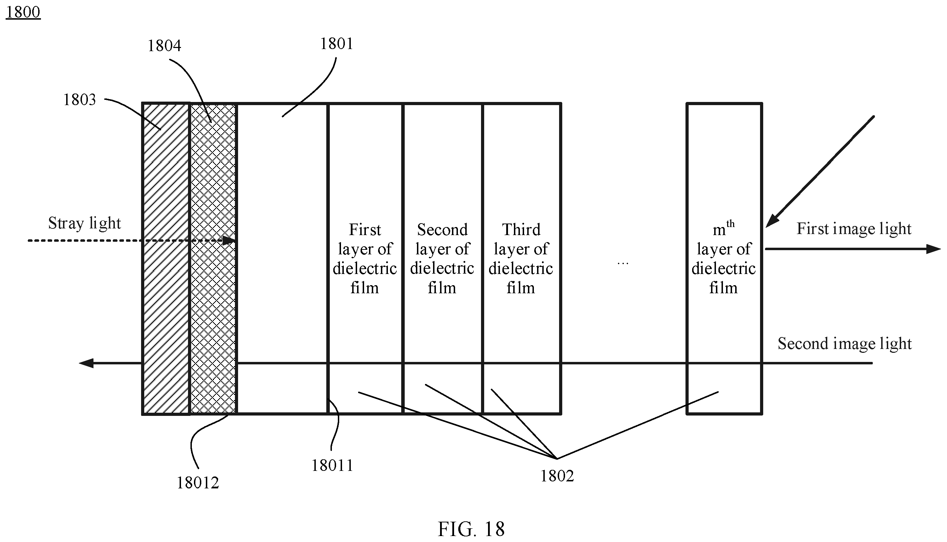

FIG. 18 is a diagram of a structure of an eighth type of window unit 1800 according to this application. As shown in FIG. 18, the window unit 1800 includes a substrate 1801, a spectral film 1802, an absorptive ND filter 1803, and a polarization module 1804. The window unit 1800 is different from the window unit 1700 shown in FIG. 17(a) and FIG. 17(b) in that the polarization module 1804 is added. The polarization module 1804 is disposed on a second surface 18012 of the substrate 1801, and is configured to eliminate stray light. For the substrate 1801, the spectral film 1802, and the absorptive ND filter 1803, refer to descriptions of corresponding parts in FIG. 17(a) and FIG. 17(b) respectively. Details are not described herein again. For the polarization module 1804, refer to the description in the foregoing embodiment, for example, the polarization module 1005 in FIG. 10. Details are not described herein again.

Optionally, the polarization module 1804 is bonded to the second surface 18012 of the substrate 1801 through the optically clear adhesive. The absorptive ND filter 1803 is bonded to the polarization module 1804 through the optically clear adhesive.

It may be understood that, in some embodiments, when the spectral film 1802 is disposed on an outer side of the second surface 18012 of the substrate 1801, the polarization module 1804 is bonded to the second surface 18012 of the substrate 1801 through the spectral film 1802 and the second surface 18012 of the substrate 1801.

It may be understood that, for the window unit 1800 shown in FIG. 18, an external absorptance *A_{EXT}* and an internal absorptance *A_{INT}* of the window unit 1800 also meet *A_{EXT}* ≥ *A_{INT}*, and an external reflectance *R_{EXT}* and an internal reflectance *R_{INT}* of the window unit also meet *R_{EXT}* ≤ *R_{INT}*.

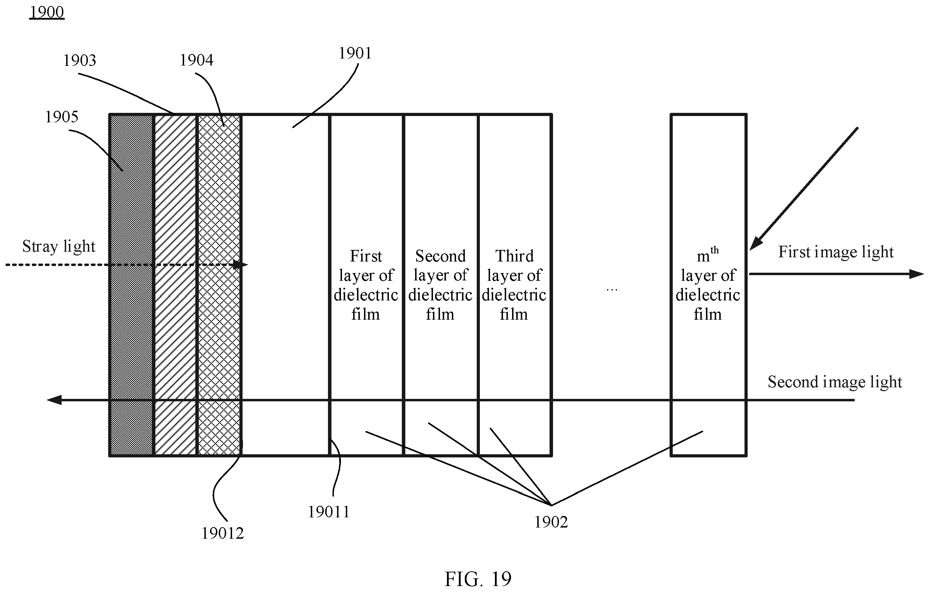

FIG. 19 is a diagram of a structure of a ninth type of window unit 1900 according to this application. As shown in FIG. 19, the window unit 1900 includes a substrate 1901, a spectral film 1902, an absorptive ND filter 1903, a polarization module 1904, and an anti-reflection coating 1905. The window unit 1900 is different from the window unit 1800 shown in FIG. 18 in that the anti-reflection coating 1905 is added. The anti-reflection coating 1905 is disposed on a surface of the polarization module 1904, and is configured to eliminate stray light. For the substrate 1901, the spectral film 1902, the absorptive ND filter 1903, and the polarization module 1904, refer to descriptions of corresponding parts in FIG. 18. For the anti-reflection coating 1905, refer to descriptions in the foregoing embodiment, for example, descriptions of the anti-reflection coating 1306 in FIG. 13. Details are not described herein again.

It may be understood that the anti-reflection coating 1905 may be disposed on a surface of the absorptive ND filter 1903 by using a process such as PVD, CVD, ALD, sputtering, or wet coating.

It may be understood that, for the window unit 1900 shown in FIG. 19, an external absorptance *A_{EXT}* and an internal absorptance *A_{INT}* of the window unit 1900 also meet *A_{EXT}* ≥ *A_{INT}*, and an external reflectance *R_{EXT}* and an internal reflectance *R_{INT}* of the window unit also meet *R_{EXT}* ≤ *R_{INT}*.

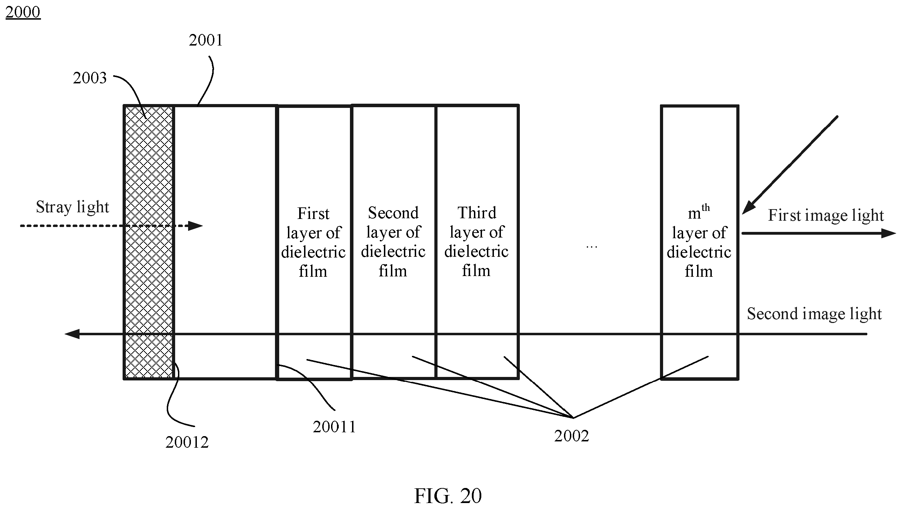

FIG. 20 is a diagram of a structure of a tenth type of window unit 2000 according to this application. As shown in FIG. 20, the window unit 2000 includes a substrate 2001, a spectral film 2002, and a polarization module 2003. For the substrate 2001 and the spectral film 2002, refer to descriptions of corresponding parts in FIG. 3 respectively. For the polarization module 2003, refer to descriptions of the corresponding part in FIG. 10. Details are not described herein again.

Optionally, the polarization module 2003 is bonded to a second surface 20012 of the substrate 2001 through the optically clear adhesive.

It may be understood that, in some embodiments, when the spectral film 2002 is disposed on an outer side of the second surface 20012 of the substrate 2001, the polarization module 2003 is bonded to the second surface 20012 of the substrate 2001 through the spectral film 2002 and the second surface 20012 of the substrate 2001.

It may be understood that, for the window unit 2000 shown in FIG. 20, an external absorptance *A_{EXT}* and an internal absorptance *A_{INT}* of the window unit 2000 also meet *A_{EXT}* ≥ *A_{INT}*, and an external reflectance *R_{EXT}* and an internal reflectance *R_{INT}* of the window unit also meet *R_{EXT}* ≤ *R_{INT}*.

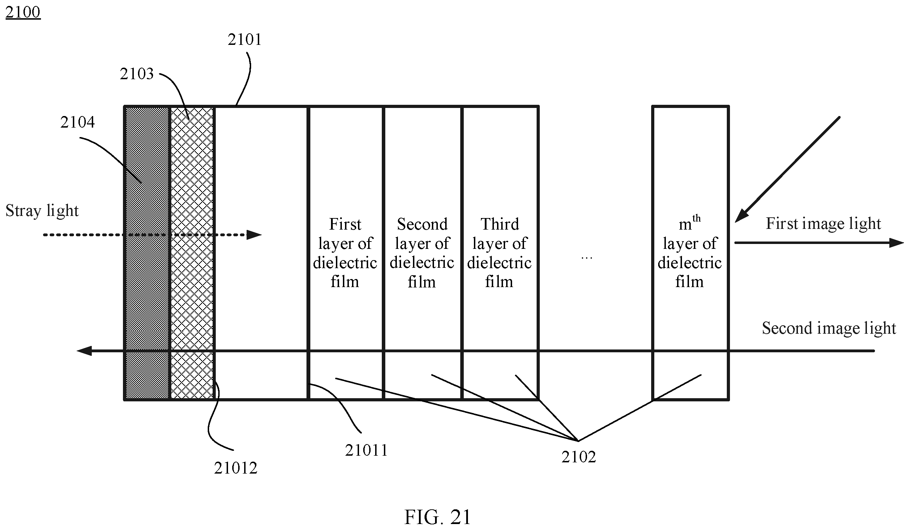

FIG. 21 is a diagram of a structure of a ninth type of window unit 2100 according to this application. As shown in FIG. 21, the window unit 2100 includes a substrate 2101, a spectral film 2102, a polarization module 2103, and an anti-reflection coating 2104. The window unit 2100 is different from the window unit 2000 shown in FIG. 20 in that the anti-reflection coating 2104 is added. The anti-reflection coating 2104 is disposed on a surface of the polarization module 2103, and is configured to eliminate stray light. For the substrate 2101, the spectral film 2102, and the polarization module 2103, refer to descriptions of corresponding parts in FIG. 20. For the anti-reflection coating 2104, refer to descriptions of the corresponding part in FIG. 13. Details are not described herein again.

It may be understood that the anti-reflection coating 2104 may be disposed on the surface of the polarization module 2103 by using a process such as PVD, CVD, ALD, sputtering, or wet coating.

It may be understood that, for the window unit 2100 shown in FIG. 21, an external absorptance *A_{EXT}* and an internal absorptance *A_{INT}* of the window unit 2100 also meet *A_{EXT}* ≥ *A_{INT}*, and an external reflectance *R_{EXT}* and an internal reflectance *R_{INT}* of the window unit also meet *R_{EXT}* ≤ *R_{INT}*.

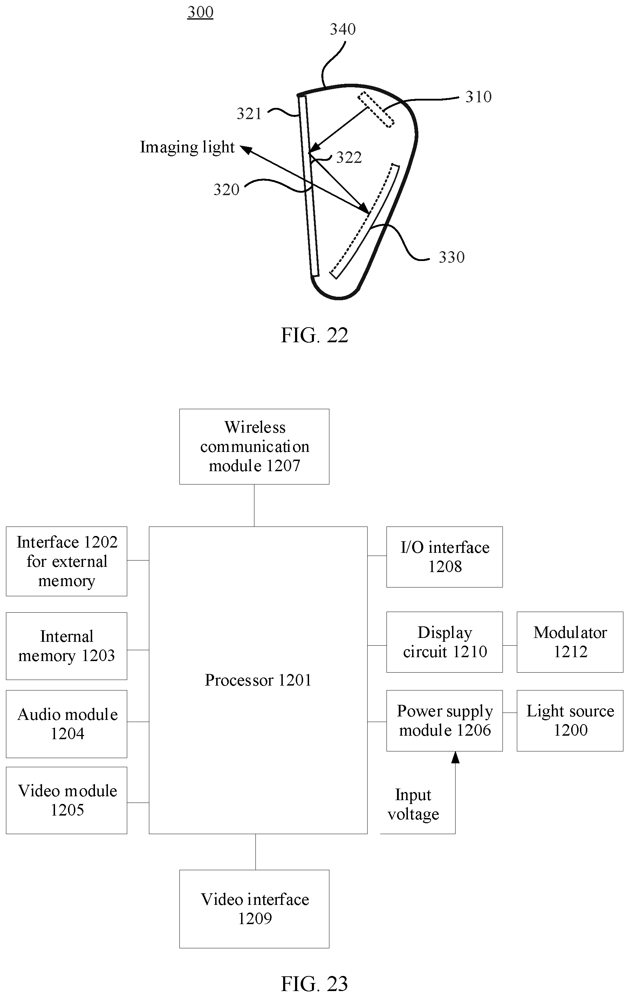

FIG. 22 is a perspective view of a possible structure of a side surface of a display apparatus 30 applicable to an embodiment of this application. As shown in FIG. 22, the display apparatus 30 includes an image generation unit 310, a window unit 320, an image magnification unit 330, and a first housing 340. The window unit 320 is any one type of window unit in the foregoing embodiments, for example, the window unit 1300 in FIG. 13. The window unit 320 includes an outer surface 321 and an inner surface 322. One end of the first housing 340 is connected to an upper edge of the window unit 320, and the other end of the first housing 340 is connected to a lower edge of the window unit 320, so that the first housing 340 and the window unit 320 form a closed cavity. The image generation unit 310 and the image magnification unit 330 are disposed in the cavity, and the inner surface 322 of the window unit 320 is located in the cavity. Specifically, when the display apparatus 30 operates (which may be considered as a process of generating an image), the image generation unit 310 emits imaging light to the inner surface 322 of the window unit 320. After being reflected on the inner surface 322 of the window unit 320, the imaging light is transmitted to a surface of the image magnification unit 330. After being reflected by the image magnification unit 330, the imaging light reaches the inner surface 322 of the window unit 320 again, and is transmitted through the inner surface 322 of the window unit 320, to be emitted from the outer surface 321 of the window unit 320. When a user views an image through the outer surface 321 of the window unit 320, the image light emitted from the outer surface 321 of the window unit 320 enters a human eye, so that the human eye can see a virtual image located on an image plane.

Optionally, the display apparatus further includes a second housing, where the second housing is fastened to a periphery of the outer surface 321 of the window unit 320 through bonding or screwing. Electronic elements, such as a button, an indicator, and a microphone, may be further disposed on the second housing, to implement different functions of the display apparatus 30.

It should be noted that the first housing 340 may be a complete housing. Alternatively, the first housing 340 may be formed by connecting a plurality of partial housings, for example, through a decorative strip.

Optionally, the image generation unit 310 may be a liquid crystal display (liquid crystal display, LCD), a liquid crystal on silicon (liquid crystal on silicon, LCOS) display, an organic light-emitting diode (organic light-emitting diode, OLED) display, a micro light-emitting diode (Micro-LED) display, a display using a mini LED display technology, a digital light processing (digital light processing, DLP) display, a micro-electro-mechanical system (micro-electro-mechanical system, MEMS) display, or the like. This is not limited in this application.

Optionally, the image magnification unit 330 is a free-form curved mirror or a non-free-form curved mirror, for example, a spherical mirror. This is not limited in this application.

It should be noted that FIG. 22 is merely an example of the display apparatus applicable to an embodiment of the display system in this application. In other words, a structure of the display apparatus 30 applicable to this embodiment of this application is not limited to the structure shown in FIG. 22. In some other embodiments, the image generation unit 310 in the display apparatus 30 may alternatively be disposed at another position, or the image magnification unit 330 may be disposed at another position. In other words, a relative position relationship between the image generation unit 310, the window unit 320, and the image magnification unit 330 is not limited in this application.

FIG. 23 is a diagram of a circuit of a display apparatus according to an embodiment of this application. As shown in FIG. 23, a circuit in the display apparatus mainly includes a main processor (host CPU) 1201, an interface 1202 for external memory, an internal memory 1203, an audio module 1204, a video module 1205, a power supply module 1206, a wireless communication module 1207, an I/O interface 1208, a video interface 1209, a display circuit 1210, and a modulator 1212. The main processor 1201 may be connected, through a bus, to peripheral elements of the main processor, such as the interface 1202 for external memory, the internal memory 1203, the audio module 1204, the video module 1205, the power supply module 1206, the wireless communication module 1207, the I/O interface 1208, the video interface 1209, and the display circuit 1210. The main processor 1201 may be referred to as a front-end processor.

In addition, the diagram of the circuit in this embodiment of this application does not constitute a specific limitation on the display apparatus. In some other embodiments of this application, the display apparatus may include more or fewer components than components shown in the figure, some components may be combined, some components may be split, or different components may be arranged. The components shown in the figure may be implemented by hardware, software, or a combination of software and hardware.

The main processor 1201 includes one or more processing units. For example, the main processor 1201 may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, a neural-network processing unit (Neural-Network Processing Unit, NPU), and/or the like. Different processing units may be independent devices, or may be integrated into one or more processors.

A memory may be further disposed in the main processor 1201, and is configured to store instructions and data. In some embodiments, the memory in the main processor 1201 is a cache. The memory may store instructions or data just used or cyclically used by the main processor 1201. If the main processor 1201 needs to use the instructions or the data again, the main processor may directly invoke the instructions or the data from the memory. This avoids repeated access and reduces waiting time of the main processor 1201, so that system efficiency is improved.

In some embodiments, the display apparatus may further include a plurality of input/output (Input/Output, I/O) interfaces 1208 connected to the main processor 1201. The interface 1208 may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like. The I/O interface 1208 may be connected to a device such as a mouse, a touchpad, a keyboard, a camera, a speaker/horn, a microphone, or the like, or may be connected to a physical button (for example, a volume button, a brightness adjustment button, a power-on/off button, or the like) on the display apparatus.

The interface 1202 for external memory may be configured to connect to an external storage card, for example, a micro-SD card, to extend a storage capability of the display apparatus. The external storage card communicates with the main processor 1201 through the interface 1202 for external memory, to implement a data storage function.

The internal memory 1203 may be configured to store computer-executable program code. The executable program code includes instructions. The internal memory 1203 may include a program storage area and a data storage area. The program storage area may store an operating system, an application required by at least one function (for example, a call function or a time setting function), and the like. The data storage area may store data (such as a phone book and world time) created in a process of using the display apparatus, and the like. In addition, the internal memory 1203 may include a high-speed random access memory, or may include a nonvolatile memory, for example, at least one magnetic disk storage device, a flash memory, or a universal flash storage (Universal Flash Storage, UFS). The main processor 1201 executes various functional applications and data processing of the display apparatus by running the instructions stored in the internal memory 1203 and/or the instructions stored in the memory disposed in the main processor 1201.

The display apparatus can implement an audio function, for example, music playing and calling, by using the audio module 1204, the application processor, and the like.

The audio module 1204 is configured to convert digital audio information into an analog audio signal output, and is also configured to convert an analog audio input into a digital audio signal. The audio module 1204 may be further configured to encode and decode an audio signal, for example, perform voice playing or voice recording. In some embodiments, the audio module 1204 may be disposed in the main processor 1201, or some functional modules of the audio module 1204 are disposed in the main processor 1201.

The video interface 1209 may receive an audio and video signal input externally, and may be specifically a high definition multimedia interface (High Definition Multimedia Interface, HDMI), a digital visual interface (Digital Visual Interface, DVI), a video graphics array (Video Graphics Array, VGA), or a display port (Display port, DP), or the like. The video interface 1209 may further output a video. When the display apparatus is used as an in-vehicle display, the video interface 1209 may receive a speed signal and a power signal that are input by a nearby device, and may further receive a VR video signal input externally. When the display apparatus is used, the video interface 1209 may receive a video signal input by an external computer or terminal device.

The video module 1205 may decode a video input by the video interface 1209, for example, perform H.264 decoding. The video module may further encode a video collected by the display apparatus, for example, perform H.264 encoding on a video collected by an external camera. In addition, the main processor 1201 may also decode the video input through the video interface 1209, and then output a decoded image signal to the display circuit 1210.

The display circuit 1210 and the modulator 1212 are configured to display a corresponding image. In this embodiment, the video interface 1209 receives a video source signal input externally, the video module 1205 performs decoding and/or digitization processing and outputs one or more image signals to the display circuit 1210, and the display circuit 1210 drives, based on the input image signal, the modulator 1212 to perform imaging on incident polarized light, to output image light. The main processor 1201 may also output one or more video signals to the display circuit 1210.

In this embodiment, the display circuit 1210 and the modulator 1212 belong to electronic elements in the image generation unit, and the display circuit 1210 may be referred to as a drive circuit.

The power supply module 1206 is configured to supply power to the main processor 1201 and a light source 1200 based on input electric power (for example, a direct current). The power supply module 1206 may include a rechargeable battery, and the rechargeable battery may supply power to the main processor 1201 and the light source 1200. Light emitted by the light source 1200 may be transmitted to the modulator 1212 for imaging, to form an image optical signal.

The wireless communication module 1207 may enable the display apparatus to perform wireless communication with the outside, and may provide wireless communication solutions such as a wireless local area network (Wireless Local Area Network, WLAN) (for example, a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), near field communication (Near Field Communication, NFC), and an infrared technology (Infrared, IR). The wireless communication module 1207 may be one or more devices integrating at least one communication processing module. The wireless communication module 1207 receives an electromagnetic wave through the antenna, performs frequency modulation and filtering processing on the electromagnetic wave signal, and sends a processed signal to the main processor 1201. The wireless communication module 1207 may further receive a to-be-sent signal from the main processor 1201, perform frequency modulation and amplification on the signal, and convert a processed signal into an electromagnetic wave for radiation through the antenna.

In addition, video data decoded by the video module 1205 may be input through the video interface 1209 and received by the wireless communication module 1207 in a wireless manner or read from an external memory. For example, the display apparatus may receive video data from a terminal device or an in-vehicle entertainment system through a wireless local area network in a vehicle. The display apparatus may further read audio/video data stored in the external memory.

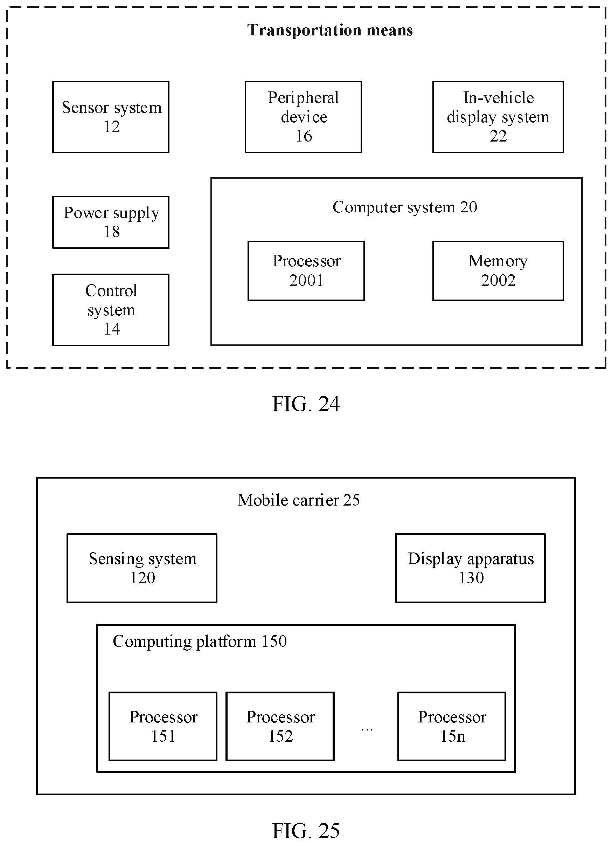

The foregoing display apparatus may be installed on a transportation means. FIG. 24 is a diagram of a possible functional framework of a transportation means according to an embodiment of this application.

As shown in FIG. 24, the functional framework of the transportation means may include various subsystems, for example, a sensor system 12, a control system 14, one or more peripheral devices 16 (one is shown as an example in the figure), a power supply 18, a computer system 20, and an in-vehicle display system 22. Optionally, the transportation means may further include another functional system, for example, an engine system that supplies power to the transportation means, and this is not limited herein in this application.

The sensor system 12 may include several detection apparatuses. The detection apparatuses can sense measured information, and convert, according to a specific rule, the sensed information into an electrical signal or information in another required form for output. As shown in the figure, the detection apparatuses may include a global positioning system (global positioning system, GPS), a vehicle speed sensor, an inertial measurement unit (inertial measurement unit, IMU), a radar unit, a laser rangefinder, a camera apparatus, a wheel speed sensor, a steering sensor, a gear sensor, another element used for automatic detection, or the like, and this is not limited in this application.

The control system 14 may include a plurality of elements, for example, a steering unit, a brake unit, a lighting system, an autonomous driving system, a map navigation system, a network time system, and an obstacle avoidance system shown in the figure. Optionally, the control system 14 may further include elements such as a throttle controller and an engine controller that are configured to control the driving speed of the vehicle. This is not limited in this application.

The peripheral device 16 may include several elements such as a communication system, a touchscreen, a user interface, a microphone, and a speaker shown in the figure. The communication system is configured to implement network communication between the transportation means and another device other than the transportation means. In actual application, the communication system may implement network communication between the transportation means and the another device by using a wireless communication technology or a wired communication technology. The wired communication technology may refer to performing communication between the vehicle and the another device by using a network cable, an optical fiber, or the like.

The power supply 18 represents a system used for providing power or energy for the vehicle, and may include but is not limited to a rechargeable lithium battery or a lead-acid battery. In actual application, one or more battery modules in the power supply are configured to provide electrical energy or energy for starting the vehicle. A type and a material of the power supply are not limited in this application.

Several functions of the transportation means are all controlled and implemented by the computer system 20. The computer system 20 may include one or more processors 2001 (one processor is shown as an example in the figure) and a memory 2002 (which may also be referred to as a storage apparatus). In actual application, the memory 2002 is also disposed inside the computer system 20, or may be disposed outside the computer system 20, for example, used as a cache in the transportation means. This is not limited in this application.

The processor 2001 may include one or more general-purpose processors, for example, a graphics processing unit (graphics processing unit, GPU). The processor 2001 may be configured to run a related program stored in the memory 2002 or instructions corresponding to a program, to implement a corresponding function of the vehicle.

The memory 2002 may include a volatile memory (volatile memory), for example, a RAM. The memory may alternatively include a non-volatile memory (non-volatile memory), for example, a ROM, a flash memory (flash memory), an HDD, or a solid-state drive SSD. The memory 2002 may alternatively include a combination of the foregoing types of memories. The memory 2002 may be configured to store a set of program code or instructions corresponding to program code, so that the processor 2001 invokes the program code or the instructions stored in the memory 2002 to implement a corresponding function of the vehicle. In this application, the memory 2002 may store a set of program code used to control the vehicle. The processor 2001 may control safe driving of the vehicle by invoking the program code. A manner of implementing safe driving of the vehicle is specifically described in detail below in this application.

Optionally, in addition to storing the program code or the instructions, the memory 2002 may further store information such as a road map, a driving route, and sensor data. The computer system 20 may implement a vehicle-related function in combination with other elements in the diagram of the functional framework of the vehicle, such as the sensor and the GPS in the sensor system. For example, the computer system 20 may control a driving direction, a driving speed, or the like of the transportation means based on data input of the sensor system 12, and this is not limited in this application.

The in-vehicle display system 22 may include several elements, for example, a controller and an in-vehicle display. The controller 222 is configured to generate an image (for example, an image of VR content) based on a user instruction, and send the image to the in-vehicle display for display. The in-vehicle display may include the image generation unit, the window unit, and the image magnification unit. A passenger may view, by using the window unit, a target image presented by the in-vehicle display. Functions of some elements in the in-vehicle display system may alternatively be implemented by another subsystem of the vehicle. For example, the controller may alternatively be an element in the control system.

FIG. 24 in this application shows that four subsystems are included. The sensor system 12, the control system 14, the computer system 20, and the in-vehicle display system 22 are merely examples, and do not constitute a limitation. In actual application, the transportation means may combine several elements in the vehicle based on different functions, to obtain subsystems with corresponding different functions. In actual application, the transportation means may include more or fewer systems or elements. This is not limited in this application.

The transportation means may be a car, a truck, a bus, a ship, an airplane, a helicopter, an entertainment vehicle, a train, or the like. This is not particularly limited in this embodiment of this application.

FIG. 25 is a functional block diagram of a mobile carrier 25 according to an embodiment of this application. The mobile carrier 25 may include a sensing system 120, a display apparatus 130, and a computing platform 150. The sensing system 120 may include one or more sensors that sense information about an ambient environment of the mobile carrier 25. For example, the sensing system 120 may include a positioning system. The positioning system may be a global positioning system (global positioning system, GPS), or may be one or more of a BeiDou system or another positioning system, an inertial measurement unit (inertial measurement unit, IMU), a lidar, a millimeter-wave radar, an ultrasonic radar, and a camera apparatus.

Some or all functions of the mobile carrier 25 may be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors in the processor 151 to the processor 15n may invoke the instructions in the memory and execute the instructions to implement a corresponding function. The display apparatus 130 in the cabin is a display apparatus applicable to this embodiment of this application, for example, the display apparatus 30 in the foregoing embodiment.

The mobile carrier in this application may include a transportation means on a road, a transportation means on water, a transportation means in air, an entertainment device, or the like. For example, the mobile carrier may be a vehicle. The vehicle is a vehicle in a broad sense, and may be a transportation means (such as a commercial vehicle, a passenger vehicle, or a train), a recreation device, a toy vehicle, or the like. A type of the vehicle is not specifically limited in embodiments of this application. For another example, the mobile carrier may be a transportation means such as an airplane or a ship.

Unless otherwise defined, a technical term or a scientific term used herein should have a general meaning understood by a person of ordinary skill in the art of the present disclosure. The foregoing descriptions are merely an embodiment of this application, but are not intended to limit this application. Any modification, equivalent replacement, or improvement made based on this application shall fall within the protection scope of this application.

## Claims

1. A window unit, comprising a spectral film, a substrate, and a first medium, wherein
the spectral film is configured to reflect first image light and transmit second image light, the second image light is generated based on the first image light, the second image light is transmitted from a first surface of the substrate to a second surface of the substrate, and the first surface is opposite to the second surface; and
the first medium is configured to eliminate stray light, and the stray light is transmitted from the second surface to the first surface.

2. The window unit according to claim 1, wherein an external absorptance *A_{EXT}* and an internal absorptance *A_{INT}* of the window unit meet *A_{EXT}* ≥ *A_{INT}*, an external reflectance *R_{EXT}* and an internal reflectance *R_{INT}* of the window unit meet *R_{EXT}* ≤ *R_{INT}*, the external absorptance *A_{EXT}* is an absorptance of the window unit for the stray light, the internal absorptance *A_{INT}* is an absorptance of the window unit for the second image light, the external reflectance *R_{EXT}* is a reflectance of the window unit for the stray light, and the internal reflectance *R_{INT}* is a reflectance of the window unit for the first image light.

3. The window unit according to claim 2, wherein the first medium is an optical thin film made of at least one layer of metal material, and the optical thin film is disposed on a surface of the spectral film or disposed inside the spectral film.

4. The window unit according to claim 3, wherein a material of the optical thin film is metal chromium Cr or metal titanium Ti.

5. The window unit according to claim 3 or 4, wherein
a range of the external absorptance *A_{EXT}* meets 40%≤*A_{EXT}*≤95%, and a range of the internal reflectance *R_{INT}* meets 10%≤*R_{INT}*≤60%.

6. The window unit according to claim 3 or 4, wherein the window unit further comprises a neutral density ND filter, the ND filter is disposed on the first surface and/or an outer side of the second surface, and the ND filter is configured to eliminate the stray light.

7. The window unit according to claim 6, wherein a range of the external absorptance *A_{EXT}* meets 45%≤*A_{EXT}*≤99%, and a range of the internal reflectance *R_{INT}* meets 10%≤*R_{INT}*≤60%.

8. The window unit according to claim 6, wherein the window unit further comprises a polarization module, the polarization module comprises a plurality of polarization elements, and the polarization module is disposed on the outer side of the second surface, and is configured to eliminate the stray light.

9. The window unit according to claim 3 or 4, wherein the window unit further comprises a polarization module, the polarization module comprises a plurality of polarization elements, and the polarization module is disposed on an outer side of the second surface, and is configured to eliminate the stray light.

10. The window unit according to claim 9, wherein a range of the external absorptance *A_{EXT}* meets 60%≤*A_{EXT}*≤99%, and a range of the internal reflectance *R_{INT}* meets 10%≤*R_{INT}*≤60%.

11. The window unit according to claim 3 or 4, wherein the first medium is a neutral density ND filter, the ND filter is disposed on the first surface and/or an outer side of the second surface, and the ND filter is configured to eliminate the stray light.

12. The window unit according to claim 11, wherein the window unit further comprises a polarization module, the polarization module comprises a plurality of polarization elements, and the polarization module is disposed on the outer side of the second surface, and is configured to eliminate the stray light.

13. The window unit according to claim 3 or 4, wherein the first medium is a polarization module, the polarization module comprises a plurality of polarization elements, and the polarization module is disposed on an outer side of the second surface, and is configured to eliminate the stray light.

14. The window unit according to any one of claims 1 to 13, wherein the window unit further comprises an anti-reflection coating, and the anti-reflection coating is disposed on the outer side of the second surface, and is configured to eliminate the stray light.

15. The window unit according to any one of claims 1 to 14, wherein the reflectance of the window unit for the stray light is less than 4%.

16. A display apparatus, comprising: an image generation unit, an image magnification unit, and the window unit according to any one of claims 1 to 15, wherein
the image generation unit is configured to emit the first image light to the window unit;
the window unit is further configured for a human eye to view, through the window unit, a virtual image formed by the second image light; and
the image magnification unit generates through reflection the second image light based on the first image light from the window unit.

17. A cabin system, comprising the display apparatus according to claim 16.

18. A transportation means, comprising the display apparatus according to claim 16 or the cabin system according to claim 17.

19. The transportation means according to claim 18, wherein the display apparatus is disposed on at least one of a headrest of a seat of the transportation means, a backrest of the seat of the transportation means, and a dashboard of the transportation means.
